# EUROPÄISCHE PATENTSCHRIFT

(11) **EP 4 180 180 B1**
(45) Veröffentlichungstag und Bekanntmachung des Hinweises auf die Patenterteilung: **10.04.2024**
(21) Anmeldenummer: 21207837.2
(22) Anmeldetag: 11.11.2021
(51) Int. Cl.: B25B 27/00, B23P 19/08

(54) **VERFAHREN UND MONTAGEEINHEIT ZUM MONTIEREN EINES ELASTISCHEN RINGS SOWIE RINGMONTAGEVORRICHTUNG**
METHOD AND ASSEMBLY UNIT FOR MOUNTING AN ELASTIC RING AND RING ASSEMBLY DEVICE
PROCÉDÉ ET UNITÉ DE MONTAGE PERMETTANT DE MONTER UN ANNEAU ÉLASTIQUE, AINSI QUE DISPOSITIF DE MONTAGE D'ANNEAU

(43) Veröffentlichungstag der Anmeldung: 17.05.2023
(73) Patentinhaber: Ohrmann GmbH, 59519 Möhnesee (DE)
(72) Erfinder: Ohrmann, Cölestin, 59519 Möhnesee (DE)
(74) Vertreter: Prinz & Partner mbB

(56) Entgegenhaltungen:
- WO-A1-2018/224535
- US-A- 4 782 573

## Beschreibung

Die Erfindung betrifft ein Verfahren und eine Montageeinheit zum Montieren von einem oder mehreren elastischen Ringen sowie eine Ringmontagevorrichtung.

Zur Montage eines elastischen Rings, insbesondere eines Dichtrings, auf der Außenseite eines Körpers (auch Bauteil genannt), insbesondere eines kreiszylindrischen Körpers, ist es erforderlich, den elastischen Ring während des Montageprozesses zu weiten.

Im Stand der Technik gibt es verschiedene Ansätze und Ideen, um einen elastischen Ring auf einem Körper zu montieren. In die Praxis haben diese Ansätze und Ideen nur zum Teil Einzug gehalten.

Unter dem Begriff "elastischer Ring" fallen nicht nur mehr oder weniger steife O-Ringe, sondern allgemein auch ringförmige Formdichtungen, z.B. Simmerringe, Konturdichtringe oder Lippendichtringe.

Im Wesentlichen haben sich drei, im Grundansatz unterschiedliche Verfahren in der Serienfertigung durchgesetzt. Ein erster Ansatz ist die Verwendung von Fügehülsen, ein zweiter Ansatz ist die Verwendung von Mehrfingersystemen und ein dritter die sogenannte Nadeltechnik.

Eine Fügehülse ist ein Zwischenbauteil, welches als Montagehilfe genutzt wird und von dem aus der elastische Ring auf das endgültige Bauteil montiert wird. Man unterscheidet hierbei kegelige und zylindrische Fügehülsen.

Bei einer kegeligen Fügehülse erfolgt zunächst ein Auffädeln des elastischen Rings auf das rückseitige, verdünnte Ende der Fügehülse. Durch das weitere Vorschieben zum vorderen, dickeren Ende der Fügehülse wird der elastische Ring dann gedehnt. Hierbei kann es zu einer Abrollbewegung und damit zu einer Verdrehung des elastischen Rings kommen. Dies hat dann häufig eine fehlerhafte Funktion des elastischen Rings zur Folge, da der Ring nach dem Verdrehen nicht torsionsfrei auf dem Körper aufgebracht wird. Anschließend wird der elastische Ring von der Fügehülse auf das endgültige Bauteil in die Montageposition geschoben. Das Bauteil wird dabei typischerweise in eine stirnseitige Öffnung der Fügehülse eingesteckt.

Bei der Verwendung einer zylindrischen Fügehülse wird der Ring direkt auf das vordere Ende der Fügehülse gebracht, hierbei wird der Ring dann gedehnt. Dabei sind unterschiedliche Verfahren möglich.

Beide Montageverfahren mit Fügehülsen erfordern einen erheblichen mechanischen und steuerungstechnischen Aufwand. Zudem kann durch die keglige Fügehülse auch nur eine begrenzte Einstecktiefe realisiert werden und damit eine Montage des Rings nur relativ nahe an der Stirnseite des Bauteils realisiert werden. Da der Ring an einem Ende der kegligen Fügehülse aufgenommen und an dem anderen Ende wieder abgegeben wird, kann eine kegelige Fügehülse nicht fest mit der Montageeinheit verbunden sein und muss deshalb durch zusätzliche mechanische Maßnahmen gehalten werden.

Eine weitere Möglichkeit zur Montage von elastischen Ringen ist der sogenannte Mehrfingergreifer. Hierbei wird der elastische Dichtring in der Regel von sechs innenliegenden Fingern aufgeweitet, indem sich die Finger nach radial außen bewegen. Der aufgeweitete elastische Ring kann anschließend direkt auf das Bauteil aufgebracht werden. Die sechs Finger weiten den Ring zu einem Sechseck, sodass das Bauteil in den geweiteten Ring eintauchen kann. Das Bauteil taucht dabei soweit ein, dass der Ring in axialer Richtung die gewünschte Position auf dem Bauteil erreicht. Zur Montage des Rings in die Bauteilnut bzw. in die gewünschte Position auf dem Bauteil müssen nun die Finger aus dem Ring zurückgezogen werden. Da der Ring aber nur an den Fingern anhaftet, ist eine zusätzliche Mechanik erforderlich, die den Ring in der gewünschten axialen Position hält und beim Zurückziehen der Finger aus dem extrem gedehnten Ring heraus von den Fingern abstreift. Hierbei entstehen zum Teil hohe Reibkräfte, die eine schädliche Verdrehung des Rings begünstigen. Zusätzlich ergibt sich ein schlagartiges Entspannen des Rings, wenn die Finger aus dem Ring gezogen werden. Dieses Entspannen führt zu einer unkontrollierbaren (Flugbahn) Ortsveränderung des Rings und somit zu einer nicht vorherbestimmbaren Endposition des Rings auf dem Bauteil. Aus diesem Grund werden bei einigen Mehrfingersystemen die Finger einzeln oder in Gruppen gegen den Abstreifer zurückgezogen, um die Ringdehnung und damit die Ringspannung nicht abrupt auf einmal so stark zu reduzieren. Die hohen Reibkräfte und das schlagartige Entspannen des Rings können zu Qualitätsproblemen bezüglich der Ringdehnung oder Verwindung und sogar zur Beschädigung des Rings führen. Die Mehrfingertechnik erfordert eine sehr aufwendige Mechanik und Steuerungstechnik mit entsprechend umfangreicher Verschlauchung und Kabelführung, die dann diese Mehrfingergreifer im Regelfall verhältnismäßig schwer und voluminös machen. Hierdurch gestaltet sich auch die Integration an einen Roboterarm sehr ungünstig.

Darüber hinaus ist die erreichbare Einstecktiefe bei der direkten Montage durch einen Mehrfingergreifer noch stärker limitiert als bei der Montage mittels einer Fügehülse. Deshalb wird mit dieser Technik häufig nur der Ring aufgeweitet, um ihn dann auf eine zylindrische Fügehülse zu übergeben. Diese Kombination aus Fügehülse und Mehrfingergreifer stellt aber keine wirtschaftliche Lösung dar.

Ferner bietet sich die am Markt etablierte Montagetechnik mittels Nadeln an. Hierbei erfolgt eine Aufweitung und Montage des Dichtrings durch ein aufspreizbares Nadelpaar. Das Werkstück oder eine Fügehülse werden dabei mit ihrem freien Ende in den vom gespreizten Dichtring umrahmten Querschnitt bewegt. Die Nadeln wandern bei dieser Bewegung am Außenmantel des Bauteils, also des Werkstücks oder der Fügehülse entlang. Alternativ hierzu werden die Nadeln an ihrem freien Ende in Führungsbahnen oder an Führungsflächen bewegt, um den Dichtring gezielt mehr oder weniger aufzuspreizen.

Die WO 2018/224535 A1 zeigt eine Dehnungsvorrichtung für einen elastischen Dichtring, die dazu ausgebildet ist, den Dichtring zu einem rechteckigen Ringkörper mit einem vorbestimmten Länge-Breite-Verhältnis zu dehnen.

In der US 478,257,3 A1 ist eine Vorrichtung zum Einsetzen eines Dichtungsrings in eine Nut gezeigt

Die Aufgabe der Erfindung ist es, ein neuartiges Verfahren sowie eine Montageeinheit zu schaffen, mittels denen ein oder mehrere elastische Dichtringe in eine oder mehrere (Ring-)Nuten oder auf einen (vorzugsweise) zylindrischen Körper aufgebracht werden können. Die Montage soll direkt durch die Montageeinheit auch an weit von dem Werkstückende entfernten Positionen erfolgen können ohne zusätzliche Zwischenschritte wie z.B. die zwingend nötige Übergabe an eine Fügehülse. Dadurch soll der mechanische und steuerungstechnische Aufwand reduziert werden, um den eventuellen Anbau an einen Roboterarm zu erleichtern. Zudem soll die Gefahr der Beschädigung des elastischen Rings verringert werden und auch dessen Beanspruchung bei der Aufweitung möglichst geringgehalten werden, d.h., unter den bei den bekannten Verfahren üblicherweise zu erwartenden Werten liegen.

Die gestellte Aufgabe zur Montage zumindest eines elastischen Rings, insbesondere eines Dichtrings, auf der Außenseite eines Körpers mittels einer Montageeinheit mit mindestens drei Fingern, von denen ein oder mehrere relativ zu anderen beweglich sind, wird durch ein Verfahren mit den folgenden Schritten gelöst:
a) Positionieren von Fingern und Ring relativ zueinander derart, dass sich die Finger durch den durch den Ring umrahmten Querschnitt erstrecken,
b) Bewegen von mindestens einem Finger entlang eines Kreises derart oder Bewegen mehrerer Finger entlang eines gemeinsamen Kreises oder mehrerer konzentrischer Kreise derart, dass der elastische Ring gedehnt und sein Querschnitt vergrößert wird,
c) Relativbewegen von Ring und Bauteil, so dass das Bauteil in den Querschnitt hineinragt und der Ring um das Bauteil herum verläuft,
d) Bewegen von zumindest einem Finger auf dem Kreis oder mehreren Fingern auf dem gemeinsamen Kreis oder den konzentrischen Kreisen zueinander, so dass der Querschnitt des Rings verringert und der Ring abschnittsweise zwischen benachbarten Fingern das Bauteil kontaktiert, und
e) Bewegen der Finger aus dem Querschnitt heraus, wobei der Ring von den Fingern gleitet und vollständig auf dem Bauteil aufliegt.

Der Querschnitt des elastischen Ringes ist definiert durch die Fläche, die von der Innenseite der Schnur, die den Ring bildet, umschlossen und damit umrahmt wird.

Ein solches Verfahren hat den Vorteil, dass die im Schritt b) durchgeführte Vergrößerung des Querschnitts keine Verdrehung und kein Abrollen des elastischen Rings mit sich bringt, wodurch eine torsionsfreie Montage gelingt. Zudem ermöglicht die Bewegung des oder der Finger in Schritt d) und die damit einhergehende Verringerung des Querschnitts des Rings eine Kontaktierung von Bauteil und Ring. Da durch diesen Schritt auch die Schnurlänge des gedehnten Ringes reduziert wird, reduziert sich auch die verbleibende Rückstellkraft erheblich, was sich dann im Schritt e) besonders positiv auswirkt. Schon im Schritt d) findet der Ring Halt auf dem Bauteil und wird so beispielsweise an den Kontaktstellen bereits in die vorgesehene Nut rutschen. Dies stellt sicher, dass der elastische Ring bei der in Schritt e) durchgeführten Bewegung der Finger aus dem Querschnitt des elastischen Rings heraus lagesicher an der gewünschten Stelle positioniert bzw. montiert wird.

Sämtliche Finger können auf einem gemeinsamen Kreis bewegt werden oder Finger können auf einem anderen Kreis als andere Finger bewegt werden, wobei diese Kreise aber konzentrisch zueinander sind.

Wenn genau drei Finger vorhanden sind, kann einer beweglich sein und die anderen raumfest bleiben, oder zwei Finger können zu einem raumfesten Finger bewegt werden, wobei diese beiden Finger gemeinsam und gleichzeitig oder zeitversetzt bewegt werden können. In der maximal aufgeweiteten Position des Ringes sind die Finger vorzugsweise maximal voneinander beabstandet.

Durch das erfindungsgemäße Verfahren und die später noch erläuterte erfindungsgemäße Montageeinheit können auch gleichzeitig mehrere elastische Ringe montiert werden.

Gemäß einer Variante der Erfindung wird der Ring nach dem Schritt a) und vor Schritt b) durch die Finger gehalten, die sich in den durch den Ring umrahmten Querschnitt hinein erstrecken. Durch die Eigenspannung des Rings, der aufgrund der Finger eine von einer Kreisform abweichende Gestalt einnimmt, sitzt er sozusagen auf den Fingern geklemmt und lagefest.

Vorteilhafterweise können die Finger so zueinander bewegt werden, dass sie im Schritt b) aus einer Grundstellung, in der die Finger in einer oder mehreren Gruppen nahe zueinander angeordnet sind, in eine Spannstellung verfahren werden, in der die Finger gleichmäßiger oder sogar tatsächlich gleichmäßig voneinander entfernt sind. So kann der elastische Ring ausgehend von beispielsweise zwei Fingergruppen in der Grundstellung in einer schlingenartigen oder ovalen Form gehalten werden und im Schritt b) durch die Relativbewegungen der Finger gedehnt werden, wodurch er auch einen größeren Querschnitt annimmt. So ist im Schritt c) ausreichend Platz vorhanden, um das Bauteil innerhalb des Ringquerschnitts anordnen zu können.

Wie erwähnt können aber in der Grundstellung auch alle Finger in einer singulären Gruppe zusammengefasst sein. Die Finger sind in unmittelbarer Nähe zueinander positioniert oder berühren sich sogar. Vorzugsweise liegen die Finger in einem Winkelbereich von weniger als 90° (insbesondere weniger als 45°) zum Mittelpunkt des oder der Kreise.

Eine besonders vorteilhafte Variante ist dadurch gekennzeichnet, dass die Montageeinheit mindestens vier Finger hat, von denen zwei oder mehrere relativ zu anderen beweglich sind, und dass im Schritt b) mindestens zwei Finger entlang eines gemeinsamen Kreises oder mehrerer konzentrischer Kreise bewegt werden und im Schritt d) Finger auf dem Kreis oder den Kreisen zueinander bewegt werden.

Der Begriff "mindestens vier Finger, von denen zwei oder mehrere relativ zu anderen beweglich sind" bedeutet, dass nicht zwingend alle Finger im Raum beweglich sein müssen oder alle einzeln zu allen anderen beweglich sein müssen, was aber beides von der Definition mit umfasst ist. Zusätzlich umfasst sind in der Definition nämlich auch Varianten, bei denen mehrere Finger im Raum einzeln, oder gemeinsam in Gruppen, zu anderen Fingern beweglich sind, sodass es auch ein oder mehrere im Raum stationäre Finger oder relativ zueinander fest beabstandete Finger geben kann, wobei aber immer Finger vorgesehen sind, die relativ zu anderen Fingern beweglich sind.

Des Weiteren nimmt der Ring, bei einer gleichmäßigen Verteilung der Finger in der Spannstellung, eine Form an, die ähnlich zu der eines regelmäßigen Polygons ist und sich besonders zur Montage auf kreiszylindrischen Bauteilen eignet und dennoch die Montage auf davon abweichend geformten Bauteilen erlaubt.

Vorteilhafterweise können die Finger einzeln oder gruppenweise, insbesondere paarweise, um eine Drehachse, die durch den Mittelpunkt des Kreises oder der Kreise verläuft, relativ zueinander bewegt werden. Durch die gruppen- oder sogar paarweise Bewegungen der Finger kann eine symmetrische Aufweitung des elastischen Rings erfolgen, die die entstehenden Spannungen im Ring möglichst gleichmäßig auf dessen Umfang verteilt. Somit wird die Belastung möglichst geringgehalten und die Gefahr einer Beschädigung des elastischen Rings kann vermieden werden.

Bevorzugt sind die Finger einzeln oder gruppenweise, insbesondere paarweise auf Fingerträgern angeordnet. Die Relativbewegung der Finger im Schritt b) wird durch ein Verdrehen mindestens eines Fingerträgers um die Drehachse zu einem anderen verursacht. Somit ist zur Aufdehnung des elastischen Rings nur der Antrieb eines Fingerträgers relativ zu dem oder den anderen notwendig, um eine Bewegung eines oder mehrerer Finger entlang einer Kreisbahn zu verursachen, die eine gleichmäßige Aufweitung des elastischen Rings zu Folge hat.

Die Montageeinheit kann wenigstens zwei, vorzugsweise aber wenigstens drei Fingerträger aufweisen, wobei zumindest ein (vorzugsweise sogar genau ein) Fingerträger verdrehfest ist und der oder die weiteren Fingerträger eine Drehbewegung um die Drehachse erlauben, sodass die Finger im Schritt b) am Umfang zumindest annähernd gleichmäßig verteilt sind. Alternativ hierzu sind alle Fingerträger verdrehbar. Durch diese Variante kann dem Ring neben einer gleichmäßigen Polygonform jede beliebige Polygonform in der Spannstellung aufgezwungen werden.

Die eingangs genannte Aufgabe wird zudem gelöst durch eine Montageeinheit zur Durchführung des erfindungsgemäßen Verfahrens, mit wenigstens drei Fingern, von denen zumindest einer relativ zu zumindest einem anderen längs eines gemeinsamen Kreises oder mehrerer konzentrischer Kreise beweglich ist, wobei die Finger aus einer Grundstellung, in der sie umfangsmäßig ungleichmäßig auf dem Kreis oder den Kreisen verteilt sind und in einen durch einen elastischen Ring umrahmten Querschnitt ragen können, in eine Spannstellung beweglich sind, in der sie gleichmäßiger auf dem Kreis oder den Kreisen verteilt sind und den durch den Ring umrahmten Querschnitt vergrößern, und wobei der oder die Finger wieder zurück in die Grundstellung beweglich sind. Die sich hieraus ergebenden Vorteile sind den obigen Absätzen zu entnehmen.

Die Montageeinheit hat insbesondere mindestens vier Finger, von denen zwei oder mehrere relativ zu anderen beweglich sind und dass mindestens zwei Finger entlang eines gemeinsamen Kreises oder mehrerer konzentrischer Kreise beweglich sind.

Bevorzugt sind wenigstens sechs Finger vorgesehen, die paarweise auf Fingerträgern angeordnet sind und um eine gemeinsame Drehachse relativ zueinander beweglich sind. Die gemeinsame Drehachse ermöglicht eine Relativbewegung aller Finger auf Kreisbögen, die alle ein und denselben Kreis definieren oder auf konzentrischen Kreisbögen.

Die Fingerträger können scheibenförmig oder ringförmig sein. Durch den Freiraum innerhalb des Fingerträgers, also die zentrische Öffnung in ringförmigen Fingerträgern, kann das Bauteil weit in die Montageeinheit gesteckt werden. Damit wird auch eine Montage des elastischen Rings an weit von einem axialen Ende des Bauteils entfernter Stellen ermöglicht.

Die Fingerträger können in Richtung der gemeinsamen Drehachse übereinander angeordnet sein. Dies ermöglicht eine besonders kompakte und platzsparende Bauweise der Montageeinheit.

Eine Variante der Erfindung sieht vor, dass sich alle Finger zu ihrem freien Ende hin von einem endseitigen Fingerträger axial weg erstrecken und dass sich Finger aller anderen Fingerträger axial vorbei an allen Fingerträgern in Richtung zum endseitigen Fingerträger und am endseitigen Fingerträger vorbei erstrecken. Das bedeutet, der endseitige Fingerträger ist derjenige, der an den oder die Ringe angrenzt. Die Finger stehen aber alle relativ zu ihm auf einer Seite vor. In diesem vorstehenden Aufnahmebereich wird der oder werden die Ringe aufgenommen. Die nicht am endseitigen Fingerträger angebrachten Finger ragen sozusagen aus anderen Ebenen in diesen Aufnahmebereich. Sie können sich, wenn Fingerträger ringförmig sind, durch die zentrale Öffnung erstrecken oder radial außen an den Fingerträgern vorbei erstrecken. In beiden Fällen verlaufen diese Finger an den anderen Fingerträgern innen- oder außenseitig vorbei.

Die Finger können paarweise auf einem gemeinsamen Fingerträger sitzen und um 180° zur Drehachse versetzt auf ihrem Fingerträger angeordnet sein. Hierdurch kann eine symmetrische Aufspannung des elastischen Rings erfolgen.

Bevorzugt weisen Fingerträger in Umfangsrichtung wirkende mechanische Endanschläge auf. Zumindest ein oder die angetriebenen Fingerträger (optional auch bewegte Fingerträger, die nicht einen eigenen, angetriebenen Antrieb haben) besitzen einen Mitnehmer. Endanschläge und Mitnehmer begrenzen die relative Verdrehung der Fingerträger zueinander, wobei zumindest in der Spannstellung, optional auch in der Grundstellung, alle Finger an den zugeordneten Endanschlägen anliegen. Der singuläre Mitnehmer für alle bewegten Fingerträger, der auf einem bewegten Fingerträger vorgesehen ist, oder die mehreren, auf verschiedenen bewegten Fingerträgern vorgesehene Mitnehmer stoßen an den Endanschlag eines anderen, insbesondere des benachbarten Fingerträgers an. Dieser Fingerträger kann dann entweder mitbewegt werden oder er kann ein stationärer Fingerträger sein. Somit ist die Drehbewegung der Fingerträger nur bis zu einem gewissen Maß möglich und die Endanschläge ermöglichen es, deren Endposition genau festzulegen. Dadurch kann eine Verstellung der Fingerträger erfolgen, ohne dabei den genauen Drehwinkel der Fingerträger sensorisch erfassen zu müssen, da die Grundstellung und die Spannstellung durch die Endanschläge definiert sind.

Einer der Fingerträger kann, wie bereits erwähnt, direkt angetrieben sein und zuerst aus der Grundstellung in Richtung Spannstellung bewegt werden und auf dem Weg zwischen Grundstellung und Spannstellung über einen Mitnehmer einen anderen Fingerträger mitbewegen, vorzugsweise bis der letzte bewegte Fingerträger an einem dann nicht mehr bewegten Endanschlag anstößt. Hierdurch kann eine Relativbewegung zwischen den Fingerträgern erzeugt werden, für die ein einzelner Antrieb ausreicht. Die Mitnahme der anderen Fingerträger durch den einen angetriebenen Fingerträger führt dazu, dass der aufgenommene elastische Ring schonend gedehnt bzw. aufgespannt wird, sodass sich die Zugspannungen vergleichmäßigen können.

In einer Ausführungsform sind die Finger oder, wenn es Fingerträger gibt, die Fingerträger elektrisch angetrieben. Sensoren detektieren die Position der Finger in der Grundstellung und der Spannstellung. Die Sensoren können optional die Position der Finger und/oder der Fingerträger dauerhaft erfassen.

Optional ist es möglich, die Finger, auch die Finger eines Fingerpaares, individuell relativ zueinander zu bewegen. Somit kann jeder Finger einzeln und gegebenenfalls sogar mechanisch unabhängig von den anderen Fingern verstellt werden. Diese Verstellung kann durch verschiedene Antriebskonzepte erreicht werden und ist nicht auf einen Elektroantrieb beschränkt.

Vorzugsweise können die Finger in der Spannstellung die Ecken eines regelmäßigen Polygons bilden.

Die Finger können im Kontaktbereich mit dem Ring an ihrem Außenumfang abgerundet oder gefast sein. Die Finger können darüber hinaus mit ihrer Kontur an die Kontur des Ringes, z.B. der Formdichtung, angepasst sein. Dadurch wird gewährleistet, dass der elastische Ring bei einer Relativbewegung der Fingerträger, welche auch eine Bewegung der Finger zu Folge hat, über diese gleitet und nicht durch scharfe Kanten beschädigt werden kann. Außerdem ist auch die Bewegung der Finger aus dem Querschnitt des elastischen Rings heraus in Schritt e) (auch wegen der reduzierten Ringspannung) deutlich schonender und verhindert ein Schlitzen des elastischen Rings.

Optional können auch drehbare Walzen an den Fingern angebracht sein oder die Finger bilden, um die Gleitbewegung zu verhindern.

Bevorzugt ist zumindest ein Finger stationär an der Montageeinheit angebracht und weitere Finger längs des Kreises beweglich. Somit verharrt der oder die stationären Finger in der Grundstellung und die beweglichen Finger ermöglichen es, den elastischen Ring aufzuspannen und eine Spannstellung zu erreichen.

Eine vorteilhafte Variante der Erfindung sieht vor, dass alle angetriebenen Finger in der Grundstellung nebeneinander und in einer gemeinsamen Gruppe angeordnet sind und in der Spannstellung voneinander entfernt sind, vorzugsweise wobei die Finger der Gruppe in der Grundstellung auf einem gemeinsamen oder mehreren konzentrischen Kreisen liegen. Durch diese Positionierung der Finger liegen diese in der Grundstellung sehr nahe beieinander, so dass der Abstand der am weitesten voneinander entfernten Finger samt der hinzuzurechnenden Fingerdicken kleiner als der Querschnitt der zu montierenden Ringe ist. Das heißt wiederum, die Ringe müssen nicht deformiert, d.h. in eine andere Form gebracht werden, wenn sie auf die Montageeinheit aufgesetzt oder von der Montageeinheit aufgenommen werden. Die Ringe werden, wenn die Finger nach oben abstehen, einfach auf die Montageeinheit aufgelegt und haben seitlich noch viel Spiel zu den Fingern. Die Ringe werden dann erst beim Bewegen der Finger genau zur Montageeinheit zentriert. Die Finger können aber auch umgekehrt, wenn sie nach unten weisen, einfach in den vom Ring umrahmten Querschnitt eindringen und dann voneinander weg bewegt werden. Auch hier sind die Positionstoleranzen sehr hoch, was insgesamt die Zuverlässigkeit der Montageeinheit ebenfalls verbessert.

Eine weitere Verbesserung lässt sich dadurch erreichen, dass sogar bewegte und stationäre Finger in einer Gruppe angeordnet sind oder insgesamt in einem Winkelbereich von weniger als 90° bezogen auf den Mittelpunkt des oder der Kreise liegen.

Optional können zumindest ein oder sogar alle Finger nach innen und außen beweglich sein. Dies ist besonders in der Grundstellung von Bedeutung, da es die Aufnahme von Ringen mit einem ungünstigen Durchmesser/Schnurverhältnis oder bei Sonderformen vereinfachen kann. Ferner kann durch Veränderung des Abstandes der Finger von der Drehachse die Montageeinheit auch auf unterschiedliche Ringabmessungen eingestellt werden.

Ferner wird die Eingangs genannte Aufgabe durch eine Ringmontagevorrichtung mit einem mehrachsigen, freiprogrammierbaren Arm und einer am Arm montierten Montageeinheit nach einem der vorherigen Absätze gelöst. Dies hat den Vorteil, dass die Montageeinheit auch zur automatisierten Montage des elastischen Rings an Bauteilen genutzt werden kann, die an unterschiedlichen Stellen im Raum positioniert sind. Hierbei bringen die kompakte Bauform und das geringe Gewicht der vorgestellten Montageeinheit einen erheblichen Vorteil im Vergleich zur Mehrfingertechnik.

Die Ringmontage mit der erfindungsgemäßen Montageeinheit ist für einen vollautomatischen Ablauf geeignet, sie kann aber auch an Handarbeitsplätzen eingesetzt werden.

Die Erfindung wird nachfolgend anhand verschiedener Ausführungsformen beschrieben, die in den beigefügten Zeichnungen dargestellt sind. In diesen zeigen:
- Figur 1 eine perspektivische Ansicht einer Montageeinheit in der Grundstellung gemäß einer Ausführungsform der Erfindung;
- Figur 2 eine perspektivische Ansicht der Montageeinheit in der Spannstellung;
- Figur 3 eine perspektivische Ansicht eines verdrehfesten Fingerträgers;
- Figur 4 eine perspektivische Ansicht eines angetriebenen Fingerträgers;
- Figur 5 eine perspektivische Ansicht eines verdrehbaren, mitgenommenen Fingerträgers;
- Figur 6 eine Draufsicht auf die Montageeinheit der Figuren 1 bis 5 in der Grundstellung;
- Figur 7 eine Draufsicht auf die Montageeinheit der Figuren 1 bis 5 in der Spannstellung;
- Figur 8 eine schematische Zeichnung eines einzelnen Fingerträgerausschnitts in der Draufsicht stellvertretend für verschiedene Fingerträger, bei dem die Finger beweglich auf dem Fingerträger angeordnet sind, gemäß einer ersten Variante;
- Figur 9 eine schematische Zeichnung eines einzelnen Fingerträgerausschnitts in der Seitenansicht stellvertretend für verschiedene Fingerträger, bei dem die Finger beweglich auf dem Fingerträger angeordnet sind, gemäß einer zweiten Variante,
- Figur 10 eine schematische Draufsicht auf eine erfindungsgemäße Montageeinheit, bei der die Finger beweglich auf dem Fingerträger angeordnet sind, gemäß einer dritten Variante,
- Figur 11 eine schematische Draufsicht auf eine Montageeinheit gemäß einer vierten Variante,
- Figur 12 eine schematische Draufsicht auf eine Montageeinheit gemäß einer fünften Variante,
- Figur 13 eine schematische Schnittansicht durch die Fingerträger einer erfindungsgemäßen Montageeinheit in der Grundstellung,
- Figur 14 eine Schnittansicht durch die Fingerträger nach Figur 13 in der Spannstellung,
- Figur 15 eine perspektivische Explosionsansicht einer Montageeinheit gemäß einer sechsten Variante,
- Figur 16 eine Draufsicht auf die Montageeinheit nach Figur 15 samt Antrieb, und
- Figur 17 eine Schnittansicht durch die Montageeinheit längs der Linie XVII-XVII in Figur 16.

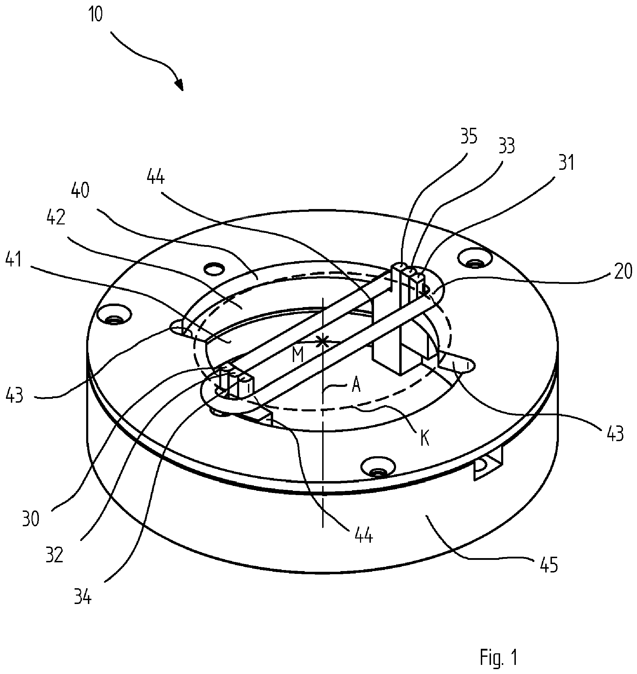

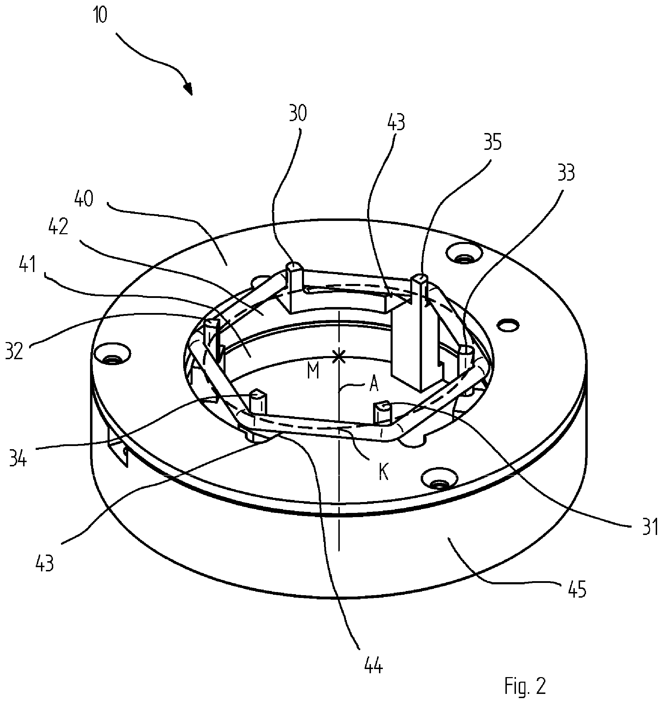

Figur 1 und Figur 2 zeigen eine Ausführungsform der erfindungsgemäßen Montageeinheit 10 mit einem elastischen Ring 20, der außen auf ein Bauteil zu montieren ist. Dabei befindet sich die Montageeinheit 10 in Figur 1 in der Grundstellung und in Figur 2 in der Spannstellung.

Die Montageeinheit 10 umfasst beispielsweise sechs Finger 30, 31, 32, 33, 34 und 35 und drei Fingerträger 40, 41, 42, wobei jeweils zwei Finger, nämlich paarweise die Finger 30, 31 und 32, 33 sowie 34, 35 auf einem zugeordneten Fingerträger 40, 41, 42 sitzen.

Die Finger 30 bis 35 ragen sowohl in der Grundstellung als auch in der Spannstellung der Montageeinheit 10 in den durch den Ring 20 definierten und von seiner umlaufenden Schnur umrahmten Querschnitt hinein, sodass der Ring 20 von den Fingern 30 bis 35 auf deren Außenseite durch die durch die Eigenspannung des Rings 20 erzeugte Reibung gehalten wird, um ein ungewolltes Herunterrutschen des Rings 20 von den Fingern 30 bis 35 zu vermeiden.

Zur Aufnahme des elastischen Rings 20 in der Grundstellung sind verschiedene Optionen möglich.

Gemäß einer Option erfolgt eine manuelle Positionierung des elastischen Rings 20 auf der Montageeinheit 10. Hierzu ist der Ring 20 in eine ovale Form zu bringen, um die Positionierung auf den beiden Fingergruppen bestehend jeweils aus den Fingern 30 bis 35 zu erleichtern.

Als weitere Option ist die automatische Positionierung des elastischen Rings 20 auf der Montageeinheit 10 denkbar. Diese könnte durch eine eigenständige Aufnahme der Montageeinheit 10 erfolgen, welche auch in Kombination mit einer automatischen Zuführung möglich wäre, die die elastischen Ringe 20 in die korrekte Form und Ausrichtung zur Aufnahme durch die Montageeinheit bringt.

Ferner ist auch eine gleichzeitige Aufnahme von mehreren elastischen, axial beabstandeten Ringen 20 denkbar, die gemäß einer der zuvor beschriebenen Optionen erfolgen kann. Anschließend könnte eine Einzelmontage der elastischen Ringe 20 an verschiedenen Positionen erfolgen.

Gemäß einer Variante besitzen die Finger 30 bis 35 zumindest an den Kontaktstellen zum Ring 20 abgerundete, z.B. polierte Kanten, um einen schonenden Montageprozess des elastischen Rings 20 gewährleisten zu können und um Beschädigung des Ringes 20 zu verhindern. Es sind aber auch andere Geometrien der Finger 30 bis 35 denkbar. So können die Finger 30 bis 35 mit ihrer Kontur an die Kontur des Ringes 20 und/oder an besondere Anforderungen der Montage angepasst sein, um einen möglichst optimalen Kontakt zwischen den Fingern 30 bis 35 und dem Ring 20 herzustellen.

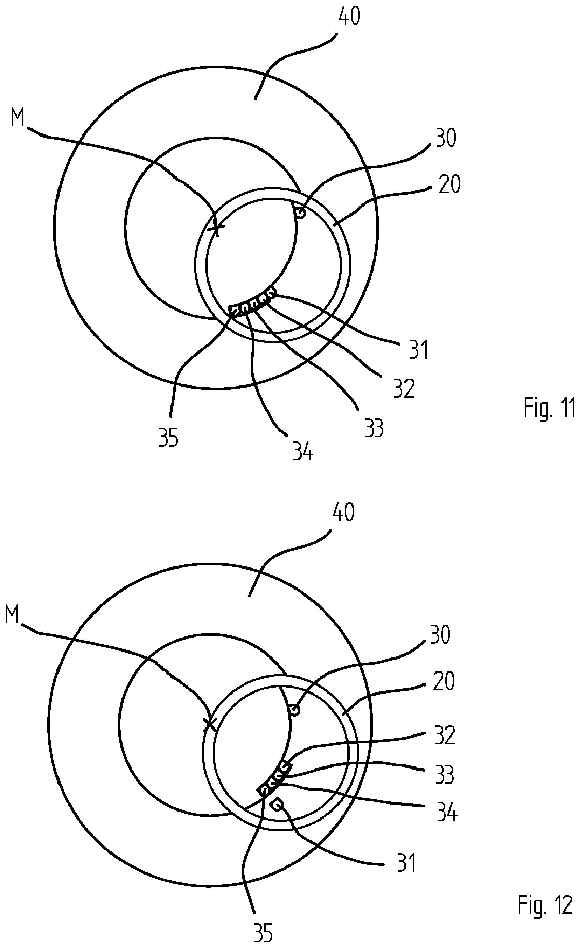

So müssen die Finger 30 bis 35, auch die Finger eines Fingerpaares/Fingerträgers, nicht identisch ausgeführt sein. Vielmehr können sie an die Montageanforderungen angepasst werden. So kann beispielsweise ein oder können mehrere Finger 30 bis 35 radial weiter außen sitzen oder weiter nach außen ragen als die übrigen Finger (siehe hierzu später die Figur 12), so dass beim Herausziehen der Finger 30 bis 35 aus dem montierten Ring 20 nur noch wenige oder nur ein Finger Kontakt mit dem Ring 20 hat.

Die Finger 30 bis 35 können in Axialansicht (Draufsicht) verschiedenste Formen haben. Dies kann so weit gehen, dass die Finger auch kreissegmentförmig ausgeführt sein können, vergleichbar mit einem Bogen, welcher radial nach außen konvex verläuft. Sind die Bögen umfangsmäßig sehr lang, indem sie sich beispielsweise über mindestens 60° am Umfang erstrecken, können sich die Finger, wenn sie voneinander weg gedreht sind, zu einer in Axialansicht umlaufenden (wegen der konzentrischen Positionierung der Kreissegmente zinnenartig gestuften) Wand ergänzen.

Die Längsachsen L der Finger 30 bis 35 können parallel zueinander und/oder parallel zu der Drehachse A verlaufen. Dennoch sind auch andere Ausrichtungen der Längsachsen denkbar.

Die Finger 30 bis 35 sind derart miteinander gekoppelt, dass eine Relativbewegung der Finger 30 bis 35 entlang von Kreisbögen stattfinden kann, wobei all diese Kreisbögen ein und denselben Kreis K oder konzentrische Kreise definieren. Das heißt, einzelne Finger können sich um den gleichen Mittelpunkt M auf einem gemeinsamen Kreis oder auf eigenen oder gruppenweise eigenen Kreisen, die konzentrisch zueinander sind, bewegen.

Eine solche Relativbewegung der Finger 30 bis 35 wird durch ein Verdrehen von mindestens einem der insgesamt drei ringförmigen Fingerträger 40, 41, 42 um deren gemeinsame Drehachse A realisiert, auf denen die Finger 30 bis 35 angeordnet sind.

Die Finger 30 bis 35 sind bei dieser Ausführungsform paarweise auf den zugeordneten Fingerträgern 40, 41, 42 positioniert und befinden sich in Bezug auf die Drehachse A der ringförmigen Fingerträger 40, 41, 42 um 180° versetzt zueinander.

Die Finger 30 bis 35 sind dabei im gezeigten Ausführungsbeispiel, das nicht einschränkend zu verstehen ist, am Umfang der inneren Mantelfläche des jeweiligen Fingerträgers 40, 41, 42 angeordnet.

Da die Fingerträger 40, 41, 42 in Richtung der gemeinsamen Drehachse A z.B. axial übereinander angeordnet sind, besitzen die Finger 30 bis 35 in Abhängigkeit von dem Fingerträger 40, 41, 42, auf dem sie positioniert sind, eine solche Länge, dass sie mit ihrem freien Ende auf der dem Ring 20 zugewandten Seite der Montageeinheit 10 alle in gleichem Maße hervorstehen. Mit anderen Worten erstrecken sich die Finger 32 bis 35 zu ihrem freien Ende hin an den jeweiligen Fingerträgern 40, 42 vorbei bis vorderhalb des Fingerträgers 40, der den endseitigen Fingerträger bildet. Somit können die Finger 30 bis 35 alle den gleichen Kontaktabschnitt besitzen, auf dem der Ring aufgenommen werden kann.

Befindet sich die Montageeinheit 10 in der Grundstellung, wie in der Figur 1 gezeigt, sind die Finger 30 bis 35 in zwei Dreiergruppen nahe beieinander angeordnet. In jeder dieser beiden Gruppen ist jeweils ein Finger 30 bis 35 jedes Fingerträgers 40, 41, 42 vertreten. Der elastische Ring 20 besitzt in der Grundstellung eine von einer Kreisform abweichende Gestalt, die einer ovalähnlichen Schlinge gleicht.

Um die Montageeinheit 10 von der Grundstellung, die in Figur 1 gezeigt wird, in die in Figur 2 gezeigte Spannstellung verstellen zu können, ist eine Relativbewegung der Finger 30 bis 35 und damit eine Verdrehung von mindestens einem der Fingerträger 41, 42 erforderlich. Dabei nehmen die Finger 30 bis 35 mehr und mehr eine Anordnung an, bei der sie gleichmäßiger voneinander entfernt sind, bis die Spannstellung erreicht ist und die Finger 30 bis 35 die Eckpunkte eines vorzugsweise regelmäßigen Polygons bilden. Dies bringt auch eine Vergrößerung des durch den Ring 20 umrahmten Querschnitts mit sich.

Um die Verstellung von der Grundstellung in die Spannstellung und wieder zurück durchführen zu können und die Finger 30 bis 35 in die gewünschte Position zu bringen, weist jeder Fingerträger 40, 41, 42 in Umfangsrichtung wirkende mechanische Endanschläge 43 bzw. Mitnehmer 44 am benachbarten Fingerträger auf, die die relative Bewegung der Fingerträger 40, 41, 42 zueinander begrenzen und die Anordnung der Finger 30 bis 35 in der Spannstellung exakt definieren. Somit liegen alle Fingerträger 40, 41, 42 in der Spannstellung an den zugeordneten Endanschlägen 43 bzw. Mitnehmer 44 an, wie später noch näher erläutert wird.

Erfolgt eine Relativbewegung der Fingerträger 40, 41, 42 zurück in die Grundstellung so wird diese Bewegung ebenfalls durch Endanschläge 43 bzw. Mitnehmer 44 definiert.

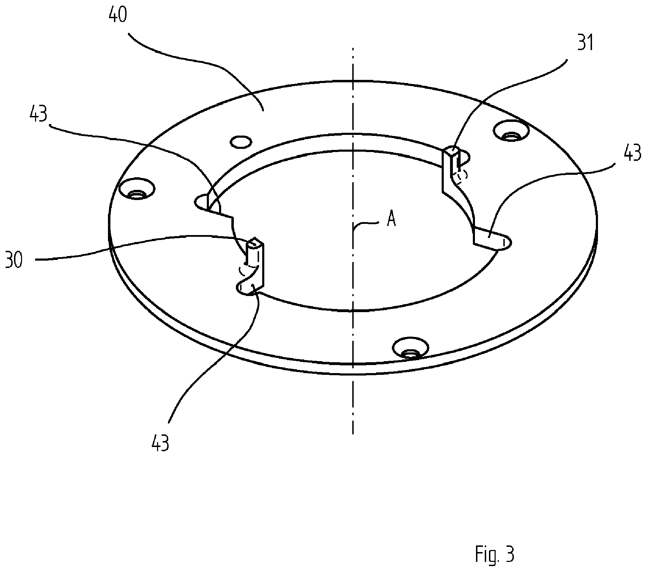

Wie in den vorherigen Absätzen erläutert, weisen alle Fingerträger 40, 41, 42 eine Ringform auf und sie haben jeweils zwei Finger 30, 31 und 32, 33 sowie 34, 35, die um 180° versetzt sind, sowie Endanschläge 43 und/oder Mitnehmer 44 (siehe Figuren 3 bis 5). Dennoch unterscheiden sich Fingerträger 40, 41, 42 in Abhängigkeit der Aufgabe, die sie in der Montageinheit 10 übernehmen, in gewisser Weise.

Figur 3 zeigt einen verdrehfesten und damit stationären Fingerträger 40, auf dem die Finger 30, 31 angeordnet sind. Es wäre denkbar, diesen zusätzlich an dem, dem Ring 20 entfernten Ende oder der äußeren Mantelfläche des Fingerträgers mit einer mechanischen Schnittstelle 45 zu versehen. Diese mechanische Schnittstelle 45 kann gemäß Figur 1 und 2 als Außengehäuse ausgeführt sein, in das die Fingerträger 41 und 42 eingesetzt werden und mit dem der Fingerträger 40 eine zerstörungsfrei lösbare Verbindung eingeht. So könnte die mechanische Schnittstelle 45 beispielsweise zur Anbindung an einem mehrachsigen, frei programmierbaren Arm dienen. Dieser Arm bildet zusammen mit der Montageeinheit eine Ringmontagevorrichtung.

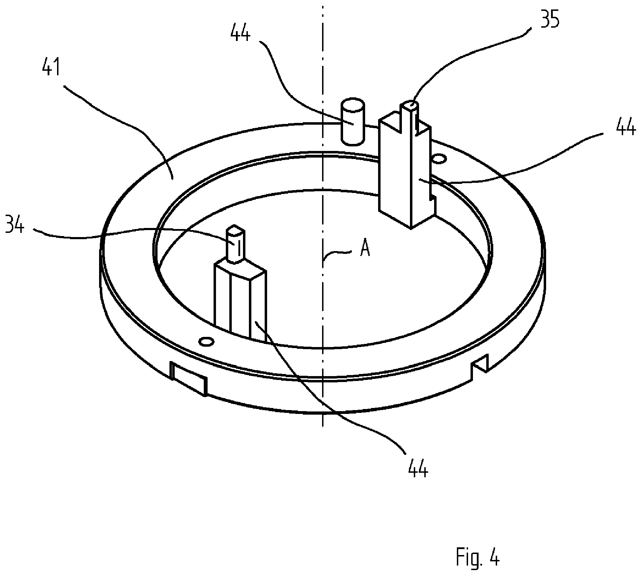

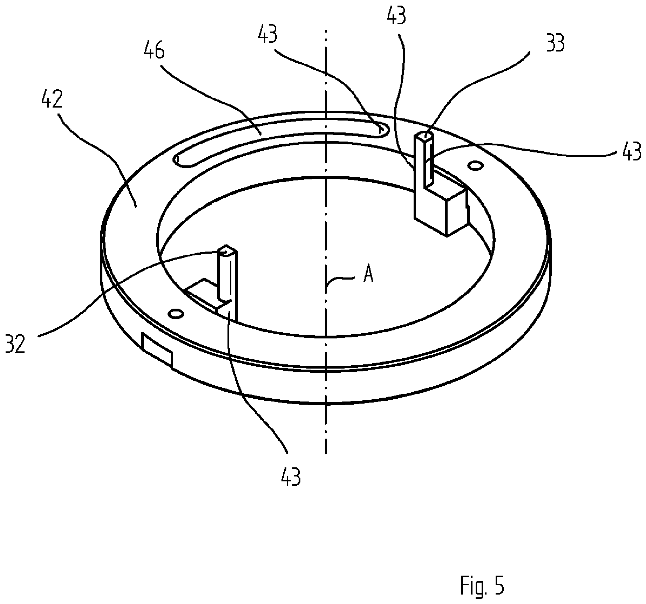

Die Figuren 4 und 5 zeigen weitere Fingerträger 41 bzw. 42, die eine Drehbewegung um die Drehachse A erlauben. Dabei ist bei diesem Ausführungsbeispiel nur der unterste Fingerträger 41 angetrieben und weist die Finger 34, 35 auf. Der zweite, mittlere, drehbare Fingerträger 42 mit den Fingern 32, 33 wird von dem angetriebenen Fingerträger 41 mitgenommen und ist neben dem Fingerträger 41 ein beweglicher Fingerträger.

Die Finger 32 bis 35 sind axial länger als die Finger 30, 31, weil ihre Fingerträger 41 , 42 unterhalb des Fingerträgers 40 liegen. Ferner haben die Finger 32 bis 35 eine verdickte, hier kubusartige Basis, die radial vom Rest des ringförmigen Fingerträgers 41, 42 nach innen vorsteht. Von dieser Basis stehen im Querschnitt (verglichen zur Basis) kleinere, stiftartige Fortsätze nach oben ab, die auf axialer Höhe der Finger 30, 31 liegen. Diese stiftartigen Fortsätze (Finger) stellen dann die Kontaktfläche zum Ring her.

Zur Mitnahme des verdrehbaren, also bewegten Fingerträgers 42 von der Grundstellung zur Spannstellung und wieder zurück ist der angetriebene Fingerträger 41 mit mindestens einem Mitnehmer 44 versehen. Gemäß einer Ausführungsform ist der Mitnehmer 44 ein axial vorstehender Bolzen auf dem Fingerträger 41, der in eine kreisbogenförmige Nut 46 in dem verdrehbaren Fingerträger 42 ragt.

Generell gilt, dass anstelle einer Nut auch ein Langloch verwendet werden kann, so dass diese Begriffe austauschbar sein sollen - über diese Ausführungsform hinweg.

Soll die Montageeinheit 10 wieder zurück in die Grundstellung gebracht werden, erfolgt die Rückstellung des zweiten, verdrehbaren Fingerträgers 42 über weitere Endanschläge 43 und Mitnehmer 44.

Die zuvor beschriebenen Endanschläge 43 können während der Verstellung der Montageeinheit 10 sowohl als Endanschlag als auch als Anschlag zur Mitnahme des zweiten verdrehbaren Fingerträgers 42 dienen.

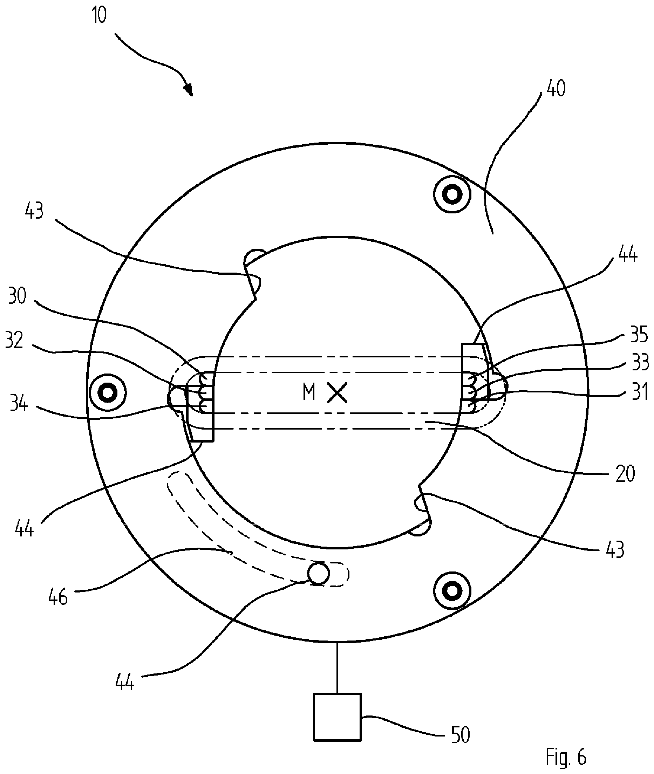

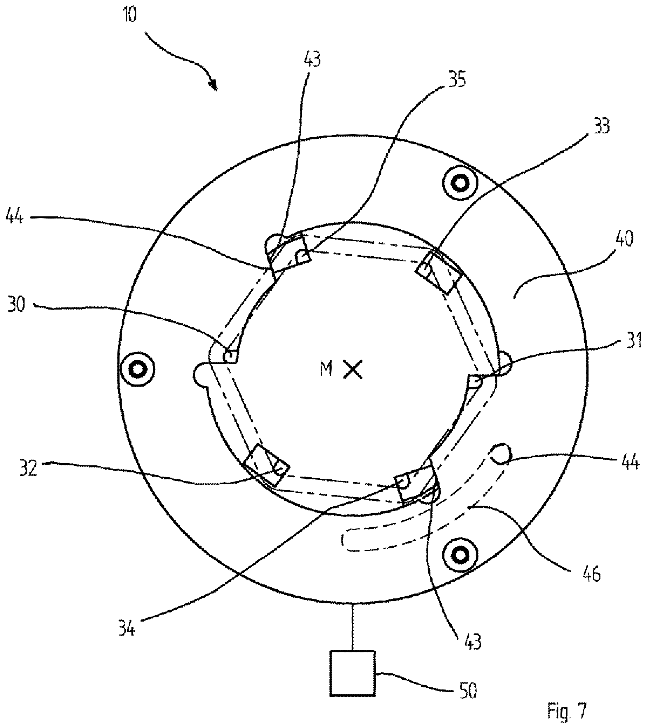

Die Figuren 6 und 7 zeigen eine Draufsicht auf die sich in der Grundstellung bzw. Spannstellung befindliche Montageeinheit 10. Um das Verständnis für den mechanischen Aufbau zu verbessern, werden in diesen Darstellungen der Mitnehmer 44, welcher als Bolzen ausgeführt sein kann, und die kreisbogenförmige Nut 46 durch gestrichelte Konturen dargestellt. Diese liegen eigentlich unter dem stationären Fingerträger 40 und sind somit nicht sichtbar.

Die Verstellung des angetrieben Fingerträgers 41 erfolgt durch den Antrieb 50. Soll die Montageeinheit 10 aus der Grundstellung in die Spannstellung gebracht werden, so wird der angetriebene Fingerträger 41 von dem Antrieb 50 in eine Drehbewegung gegen den Uhrzeigersinn versetzt.

Der in die kreisbogenförmige Nut 46 des Fingerträgers 42 hineinragende Mitnehmer 44, d. h. der Bolzen, welcher auf dem Fingerträger 41 angeordnet ist, befindet sich dabei am linken Ende der Nut 46. Bei einer Verstellung des angetriebenen Fingerträgers 41 bewegt sich der Mitnehmer 44 zunächst ungehindert in der kreisbogenförmigen Nut 46.

Nachdem der angetriebene Fingerträger 41 eine Drehbewegung von etwa 60°, relativ zum (optional axial angrenzenden) verdrehfesten Fingerträger 40, erfahren hat, schlägt der Mitnehmer 44 an das, bezogen auf Figur 5, rechte Ende der Nut 46 an, das hier als Endanschlag 43 dient. Damit erfolgt eine Mitnahme des benachbarten, zweiten drehbaren Fingerträgers 42. Es folgt eine gemeinsame Drehbewegung beider Fingerträger 41 und 42 um weitere 60°, sodass der zuerst angetriebene Fingerträger 41 eine Drehbewegung von insgesamt 120° und der zweite drehbare Fingerträger 42 von insgesamt 60° zur ursprünglichen Startposition in der Grundstellung erfahren hat. In der Spannstellung schlägt der Fingerträger 41 mit einem Mitnehmer 44, der vorliegend zum Beispiel an der Basis des Fingers 35 (siehe Figur 4) gebildet ist, gegen einen Endanschlag 43 am Fingerträger 40 an.

Der Endanschlag 43 am Fingerträger 40 ist durch einen einwärts gerichteten Vorsprung gebildet, siehe Figur 7.

Obwohl in der gezeigten Ausführungsform zwei Endanschläge 43 am Fingerträger 40 dargestellt sind, an die jeweils die Basis von Finger 34 und die Basis von Finger 35 anschlägt, reicht auch ein Endanschlag 43 aus, zur Vermeidung einer Doppelpassung.

Die Montageeinheit 10 befindet sich nun in der Spannstellung. Der Ring 20 hat dabei die Form eines gleichmäßigen Polygons, bei dem die Ecken durch die Finger 30 bis 35 definiert sind.

Der Ring 20 ist in der Spannstellung ausreichend gedehnt, um das Bauteil in den Querschnitt, der vom Ring 20 umrahmt wird (d.h. das Ringinnere) und auch noch tiefer in die zentrale Öffnung der Fingerträger 40, 41, 42 einzubringen. Dementsprechend müssen die Bauteilabmessungen im Bereich der Montageposition geringer sein als der durch den elastischen Ring 20 umschriebene Querschnitt und die zentrale Öffnung der Fingerträger 40, 41, 42.

Anschließend wird die Montageeinheit 10 zurück in Richtung Grundstellung bewegt. Hierzu bewegt der Antrieb 50 den angetriebenen Fingerträger 41 entgegengesetzt der ursprünglichen Drehbewegung und damit gemäß dieser Ausführungsform im Uhrzeigersinn. Dabei verringert sich der durch den Ring 20 umschriebene Querschnitt und es kommt zu einem abschnittsweisen Kontakt zwischen dem Ring 20 und dem Bauteil. Dabei kann der Ring 20 beispielsweise teilweise in eine Nut im Bauteil eindringen oder durch Reibung am Bauteil anhaften.

Um sicherzustellen, dass der Ring 20 auch tatsächlich in die gewünschte Nut eingreift, wäre an dieser Stelle auch eine leichte Rotation der gesamten Montageeinheit 10 um die gemeinsame Drehachse A der Fingerträger 40, 41, 42 denkbar.

Anschließend führt eine Relativbewegung zwischen dem Bauteil und der Montageeinheit 10 entlang der Drehachse A der Fingerträger 40, 41, 42 und aus dem Ringquerschnitt heraus dazu, dass der Ring 20 von den Fingern 30 bis 35 gleitet und der Ring 20 vollständig auf dem Bauteil und in der Nut aufliegt.

Bei der Bewegung zurück in die Grundstellung führt der angetriebene Fingerträger 41 zunächst eine Drehbewegung um 60° aus. Dann kontaktiert der angetriebene Fingerträger 41 den zweiten, verdrehbaren Fingerträger 42, indem an einem oder an beiden Fingern 34, 35 ein in den Uhrzeigersinn weisender Mitnehmer 44 (siehe Figur 4) an einem Endanschlag 43 am benachbarten Finger 32, 33 (siehe Figur 5) anschlägt. Damit dreht der Fingerträger 41 den Fingerträger 42 um 60° mit, bis sich die Montageeinheit 10 wieder in der Grundstellung befindet.

Alternativ kann bei der Ausführungsform nach den Figuren 1 bis 5 der bolzenartige Mitnehmer 44 am entgegengesetzten, linken Ende der Nut 46 (gemäß Figur 5) anschlagen und den Fingerträger 42 mitnehmen. In diesem Fall schlagen die Finger 33 und 35 oder 32 und 34 bzw. deren Basis beim Zurückdrehen nicht aneinander an.

Gemäß einer weiteren Ausführungsform wäre auch eine Einzelverstellung der Finger 30 bis 35 denkbar, wobei bei dieser Ausführungsform auf jedem Fingerträger auch nur ein Finger 30 bis 35 positioniert werden könnte. Die insgesamt dann sechs Fingerträger könnten beispielsweise in Nuten bzw. Schienen positioniert werden und durch separate Antriebe auch mit verschiedenen Antriebsarten bewegt werden.

Um den elastischen Ring 20 zu montieren, erfolgt wie erläutert eine Relativbewegung der Finger 30 bis 35 auf dem gemeinsamen Kreis K zueinander. Hierbei kann es auch dazu kommen, dass sich durch die Reibung zwischen dem angetriebenen Fingerträger 41 und dem mitgenommenen Fingerträger 42 oder durch den Ring 20 beide Fingerträger 41 und 42 von Beginn an relativ zu dem verdrehfesten Fingerträger 40 bewegen. Ohne Reibung bewegt sich zunächst ausschließlich der angetriebene Fingerträger 41, der erst in der weiteren Drehbewegung den mitgenommenen Fingerträger 42 durch den mechanischen Mitnehmer 44 verdreht.

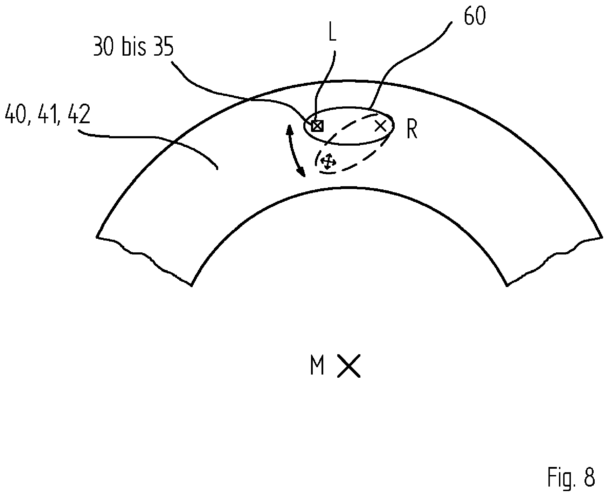

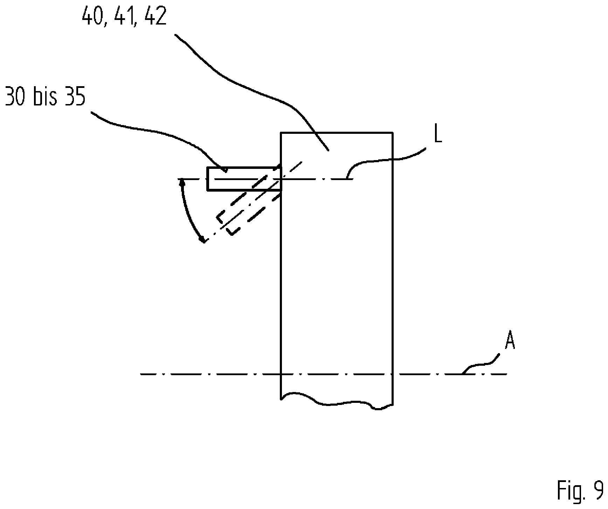

Die Figuren 8 und 9 zeigen eine erste und eine zweite Variante zur zusätzlichen Bewegung der Finger 30 bis 35 nach innen und nach außen, um unter anderem die Aufnahme des Rings 20 in der Grundstellung zu erleichtern.

Gemäß der in Figur 8 gezeigten ersten Variante, ist eine Anordnung der Finger 30 bis 35 auf einem Verstellelement 60 möglich, welches drehbar auf den Fingerträgern 40, 41, 42 angeordnet ist und die Finger 30 bis 35 durch eine Drehbewegung um die Drehachse R nach innen und außen verstellen kann, während die Längsachse L der Finger 30 bis 35 die gesamte Zeit parallel zueinander und/oder parallel zur Drehachse R verlaufen.

Ferner ist die in Figur 9 gezeigte zweite Variante denkbar, bei der die freien Enden der Finger 30 bis 35 durch eine Kippbewegung nach innen und außen bewegt werden, wobei sich hierbei der Winkel zwischen den Längsachsen L der Finger 30 bis 35 und der Drehachse A verändert.

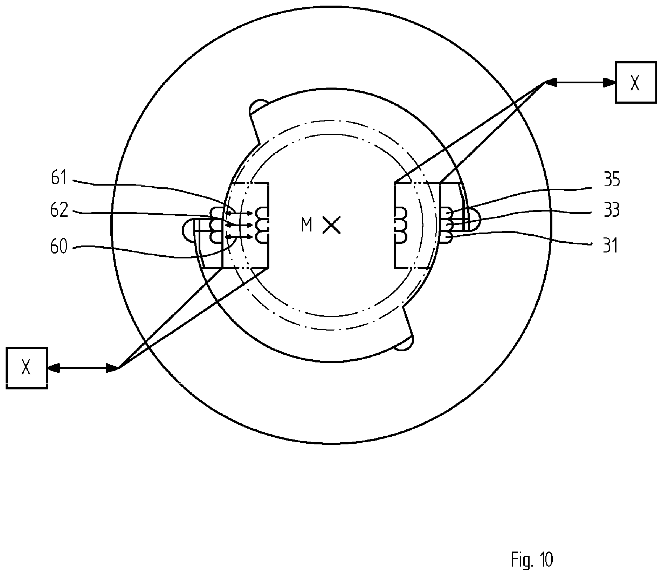

Bei der Variante nach Figur 10 sind die Finger 30 bis 35 einwärts auf einer linearen Bahn 61, 62, 63 (siehe Doppelpfeile in Figur 10) über Führungen verschieblich an ihren Fingerträgern gelagert und können somit einwärts und auswärts um das Maß X verstellt werden, z.B. beim Aufnehmen des Rings. Aber es ist auch möglich, durch dieses Verfahren die Finger 30 bis 35 auf andere Durchmesser zur Drehachse A zu bringen, um die Montageeinheit flexibel an Ringe mit kleinerem oder größerem Durchmesser anzupassen, so dass keine neuen Fingerträger hergestellt werden müssen. Es ergibt sich eine universelle Montageeinheit. Die Verstellung kann über Nocken oder Schrägflächen an einem nicht gezeigten Einstellring erfolgen oder anderweitig.

Figur 11 zeigt eine vierte Variante der erfindungsgemäßen Montageeinheit in schematischer Darstellung. Hierbei sind die Finger 30-35 nicht mehr paarweise gegenüberliegend auf einem Fingerträger angeordnet. Bei dieser Variante sind vielmehr beispielsweise die Finger 30 und 31 ortsfest, und die Finger 32-35 beweglich. Die Finger 30 und 31 sind am selben Fingerträger 40 angebracht und um weniger als 180° voneinander beabstandet, vorzugsweise sogar um weniger als 90°.

Die Finger 32-35 können einzeln oder in Gruppen nahe an den Finger 31 herangefahren werden, sodass die Finger 31-35 eine Gruppe bilden. Um die Finger 31-35 in dieser Gruppe möglichst kompakt zusammenzuführen, können sich die Finger 31-35 vorzugsweise auch berühren.

Im Vergleich zu den vorhergehenden Ausführungsformen erkennt man bei Figur 11, dass alle Finger 30-35 insgesamt sehr nahe aneinander liegen, sodass Ringe 20 mit sehr kleinem Querschnitt aufgenommen werden können, und zwar ohne dass die Ringe 20 deformiert, d.h. in eine andere Form gebracht werden müssen. Damit wird der gesamte Handlingprozess deutlich vereinfacht und erleichtert. Die hier montierten Ringe müssen die Finger 30-35 in dieser Phase der Montage nicht einmal berühren. Dies ermöglicht es nicht nur, Ringe 20 mit unterschiedlichem Querschnitt und/oder Schnurdicke in derselben Montageeinheit zu montieren, sondern reduziert auch die Genauigkeit mit der die Ringe 20 auf die Montageeinheit aufgesetzt werden müssen oder von dieser aufgenommen werden. Die Ausrichtung der Ringe 20 wird dann später durch Verdrehen der Finger 30-35 immer erreicht.

Die Finger 30-35 liegen, bezogen auf den Mittelpunkt, durch den auch die Drehachse geht, in einem Winkelbereich von maximal 90°, die Finger 31 bis 35 in einem Winkelbereich kleiner 30°.

Bei der Variante nach Figur 11 sind, wie gesagt, die Finger 30 und 31 ortsfest. Zum Dehnen des Rings 20 werden entweder die Finger 32-35 nacheinander oder in Gruppen nacheinander längs des Kreises weg vom Finger 31 bewegt. Alternativ wird der Finger 35 zuerst auf dem Kreis bewegt, anschließend wird während der Bewegung des Fingers 35 der Finger 34 dann im Abstand vom Finger 35 bewegt. Schließlich werden danach in zeitlicher Abfolge die Finger 33 und 32 bewegt. Alternativ können auch Gruppen innerhalb der Finger 32 bis 35 zeitlich zusammen bewegt werden.

Dabei können, dies ist nicht einschränkend zu verstehen, die Finger 32 bis 35 dann gleichzeitig in ihre Endlage gelangen.

In der Endlage sind die Finger 30 bis 35 dann ähnlich wie in Figur 2 gezeigt, weit oder maximal voneinander entfernt, sodass der Ring 20 maximal gedehnt ist.

Generell gilt für die Montageeinheit, und zwar nicht nur für die in Figur 11, dass die Finger 30 bis 35 nicht nur in Gruppen und mit einem Antrieb bewegt werden können, sondern gegebenenfalls auch einzeln, d.h. mit einem eigenen Antrieb, oder Gruppen mit jeweils einem eigenen Antrieb. Damit kann die Bewegung der Finger noch weiter individualisiert werden.

Während bei der Ausführungsform nach Figur 11 die Finger 30 bis 35 auf einem Umfang eines Kreises liegen, sind in der Variante nach Figur 12 die Finger 30 (ortsfest) und 32 bis 35 (beweglich) auf demselben Radius positioniert, wogegen der ortsfeste Finger 31 radial außerhalb, aber unmittelbar angrenzend an die Finger 32 bis 35 seiner Gruppe angeordnet ist.

Damit lässt sich der Maximalabstand der am weitesten voneinander entfernten Finger 30, 35 plus deren Fingerdicken minimieren und die Gruppe der Finger 31 bis 35 wird in Axialansicht kompakter ausbilden, sodass insgesamt die Finger 30 bis 35 näher zusammenliegen.

Wie man am Vergleich der Figuren 11 und 12 sieht, ist damit noch mehr Abstand zwischen den außenliegenden Fingern und der Innenseite des Rings 20 vorhanden. Hier können also noch kleinere Ringe montiert werden, bzw. die Ringe 20 können bei der Zuführung mit noch mehr Toleranz relativ zu den Fingern 30 bis 35 positioniert werden.

Die Montagevorrichtung kann aber auch nur mit drei Fingern ausgestattet sein. Bei den Beispielen nach den Figuren 11 und 12 sind dann z.B. drei Finger weggelassen und von den restlichen drei Fingern können zwei um 120° versetzt zueinander raumfest angeordnet sein und der dritte Finger ist dann anfangs im Winkelbereich der beiden stationären Finger oder nahe an diesen positioniert, um dann entlang eines Kreises in eine Position bewegt zu werden, in der alle Finger gleichmäßig beabstandet sind, so dass sich ein gleichseitiges Dreieck ergibt. Alternativ hierzu sind zwei der drei Finger beweglich und bilden anfänglich eine Gruppe, um dann entlang eines Kreises oder zweier konzentrischer Kreise voneinander umfangsmäßig (optimaler Weise gleichmäßig) beabstandet zu werden.

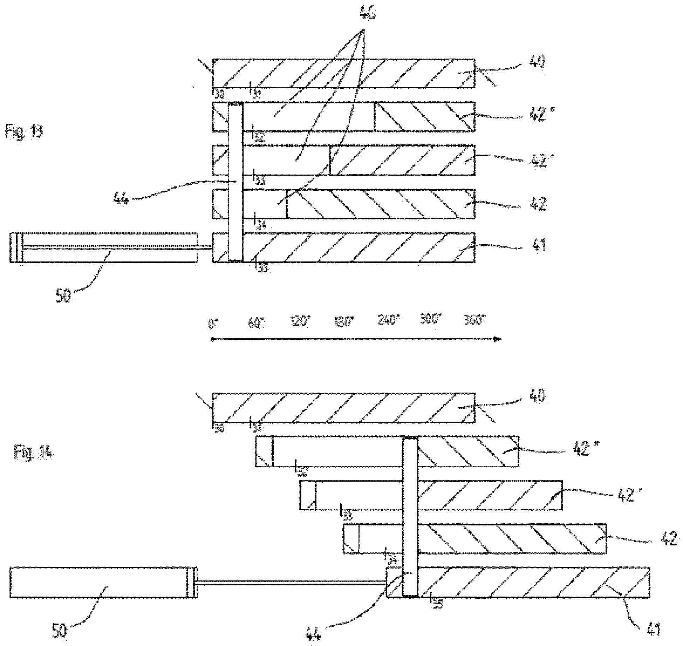

Figur 13 zeigt eine mögliche Variante. Hier ist für alle bewegten Finger ein eigener, bewegter Fingerträger vorgesehen. Die auf den Fingerträgern sitzenden Finger sind nur mit ihrer Mittellinie symbolisch dargestellt.

Der stationäre Fingerträger 40, hier bspw. der obere Fingerträger, trägt dann zum Beispiel die Finger 30 und 31. Natürlich wäre es möglich, auch nur einen Finger auf dem stationären Fingerträger 40 anzuordnen.

Der angetriebene Fingerträger 41 trägt dann den Finger 32, der Fingerträger 42 den Finger 33, der Fingerträger 42' den Finger 34 und schließlich der Fingerträger 42" den Finger 35.

Der Fingerträger 41 ist hier der unmittelbar angetriebene Fingerträger.

Der Antrieb 50 kann, wie zuvor bereits erwähnt, beliebig ausgeführt sein, das heißt ein elektrischer, pneumatischer, hydraulischer, usw. Antrieb sein. Dargestellt ist ein pneumatischer Antrieb.

Ein Mitnehmer 44, hier in Form eines Stifts, der mit dem Fingerträger 41 verbunden ist, ragt in umfangsmäßig unterschiedlich lange Nuten 46, genauer gesagt Langlöcher, in den Fingerträgern 42, 42' und 42".

Bei Aktivierung des Antriebs 50 wird sofort der Fingerträger 41 gedreht, und der Mitnehmer 44 nimmt nach einem gewissen Drehwinkel dann den Fingerträger 42, wiederum nach einer gewissen weiteren Verdrehung, den Fingerträger 42' und schließlich den Fingerträger 42" mit, um diese schließlich alle in ihre Endlagen zu bewegen, wie es in Figur 14 gezeigt ist. In dieser Spannstellung sind dann die Finger 30-35 voneinander entfernt, vorzugsweise gleichmäßig auf dem Umfang voneinander entfernt, um den Ring 20 zu spannen.

Selbstverständlich können bei der Antriebsvariante nach den Figuren 13 und 14 auch mehr oder weniger Fingerträger mit weiteren Fingern vorgesehen sein. Die Koppelung der Fingerträger 41-42" ist in der in Figur 13 gezeigten Variante sehr einfach und damit kostengünstig realisierbar.

Darüber hinaus ist es generell auch möglich, wie zuvor schon angedeutet, mehr als einen Antrieb 50 vorzusehen, sodass nicht alle Fingerträger 41-42" durch den Antrieb 50 angetrieben werden, sondern einige davon durch jeweils einen zugeordneten Antrieb oder einzelne durch eigene Antriebe.

Natürlich könnten auch bei einer anderen Konstruktion zu Beginn der Aktivierung des Antriebs 50 alle Fingerträger 41-42" bewegt werden, wobei dann nach einer gewissen Verdrehung der erste Fingerträger stehen bleibt, bis schließlich der letzte Fingerträger in seine Position gekommen ist. Dies gilt prinzipiell für alle Varianten der Montageeinheit.

Auch wäre es sowohl durch eine mechanische als auch elektrische Umkonstruktion möglich, durch ein zeitversetztes Bewegen der Finger 30-35, den Ring 20 zum Beispiel zuerst zu einem Dreieck, gebildet durch die Finger, zu formen und dann dieses Dreieck zu einem Sechseck durch Bewegen von drei Fingern relativ zu den drei übrigen, in dieser Phase nicht bewegten Fingern usw. zu formen. Hierbei lassen sich auch beliebige Varianten ausführen.

Während bei den bisher gezeigten Varianten die Fingerträger 41-42" stets in dieselbe Umlaufrichtung bewegt werden, könnten sie sich bei einer andere Ausführungsform auch teilweise gegenläufig zueinander bewegen, was entweder durch ein Zwischengetriebe (bei nur einem Antrieb) oder durch mehrere Antriebe möglich ist. Damit lassen sich Kombinationen von gleichläufigen und gegenläufigen Bewegungen realisieren.

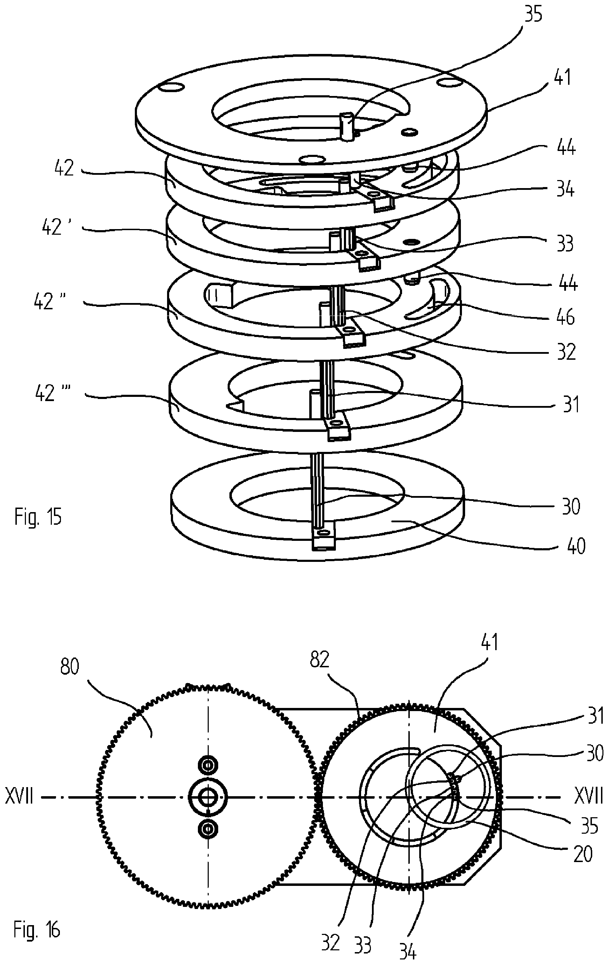

Bei der Variante nach Figur 15 bis 17 sind die Finger 30-35 in der zusammengefahrenen Position in nur einer Gruppe angeordnet, siehe Figur 16.

Diese Variante kann natürlich auch mit dem Antrieb nach den Figuren 13-14 und dem zuvor beschriebenen Antrieb realisiert werden.

Bei der Variante nach Figur 15, dies ist nicht einschränkend zu verstehen, hat jeder Fingerträger 40-42‴ nur einen Finger 30-35 zu tragen. Das heißt, der Fingerträger 40 (hier der unterste Fingerträger) ist ortsfest. Der entsprechende Finger 30 ist dann entsprechend länger und ragt durch die zentralen Öffnungen in den Fingerträgern 41 bis 42‴ nach oben, um gegenüber dem obersten Fingerträger 41 vorzustehen, ebenso wie dessen Finger 35.

Der obere Fingerträger 41 ist hier der angetriebene Fingerträger. Von diesem werden dann die Fingerträger 42-42‴ angetrieben, hier sind wieder entsprechende Zapfen (Mitnehmer 44) und Nuten 46 (mit Endanschlägen) miteinander in Eingriff.

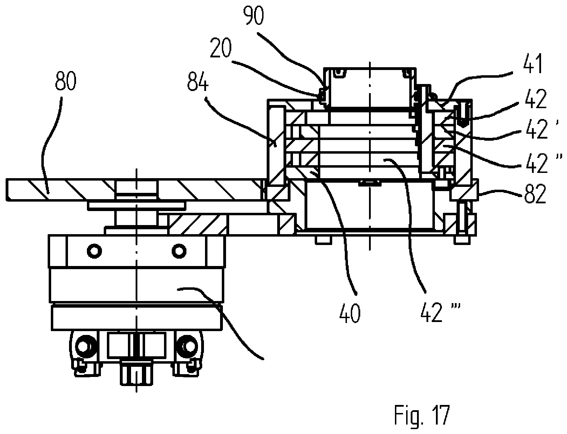

Wie in Figur 17 zu sehen ist, ist hier ein Antrieb 50 vorgesehen, welcher ein Zahnrad 80 antreibt, das wiederum mit einem Gegenzahnrad 82 kämmt. Auf dem Gegenzahnrad 82 sitzt eine Hülse 84, die das Gegenzahnrad 82 mit dem Fingerträger 41 koppelt und gleichzeitig die Fingerträger 42-42‴ umgibt und gegebenenfalls auch lagert.

In Figur 17 ist auch ein Bauteil 90 (vorliegend auch Körper genannt) zu sehen, in dessen Nut am Außenumfang ein Ring 20 eingesetzt ist.

### Generell gilt zusätzlich:

Die Anzahl der Finger ist nicht begrenzt, es können auch ungerade Anzahlen an Fingern vorgesehen sein.

Für alle Varianten kann, wie erläutert, ein gemeinsamer Mitnehmer 44 vorgesehen sein, der die übrigen angetriebenen Fingerträger bewegt, oder Fingerträger sind über eigene Mitnehmer und Endanschläge miteinander gekoppelt.

Es kann auch ein aktiver Abstreifer für den Ring 20 vorgesehen sein und/oder eine Ringfixierung auf entgegengesetzten Umfangsenden der Gruppe von Fingern (in Axialansicht in der Grundstellung), z.B. der Gruppe der Finger 30 bis 35 in Figur 16.

## Patentansprüche

1. Verfahren zum Montieren zumindest eines elastischen Rings (20), insbesondere eines Dichtrings, auf der Außenseite eines Körpers mittels einer Montageeinheit (10) mit mindestens drei Fingern (30-35), von denen zumindest einer relativ zu zumindest einem anderen beweglich ist, **gekennzeichnet durch** folgende Verfahrensschritte:
a) Positionieren von Fingern (30-35) und Ring (20) relativ zueinander derart, dass sich die Finger (30-35) durch einen durch den Ring (20) umrahmten Querschnitt erstrecken,
b) Bewegen von mindestens einem Finger (30-35) entlang eines Kreises (K) derart oder Bewegen mehrerer Finger (30-35) entlang eines Kreises (K) oder mehrerer konzentrischer Kreise derart, dass der elastische Ring (20) gedehnt und sein Querschnitt vergrößert wird,
c) Relativbewegen von Ring (20) und Bauteil (90), so dass das Bauteil (90) in den Querschnitt hineinragt und der Ring (20) um das Bauteil herum verläuft,
d) Bewegen von zumindest einem Finger (30-35) auf dem Kreis (K) oder mehreren Fingern (30-35) auf dem gemeinsamen Kreis oder den konzentrischen Kreisen zueinander, so dass der Querschnitt des Rings (20) verringert und der Ring (20) abschnittsweise zwischen benachbarten Fingern (30-35) das Bauteil (90) kontaktiert, und
e) Bewegen der Finger (30-35) aus dem Querschnitt heraus, wobei der Ring (20) von den Fingern (30-35) gleitet und vollständig auf dem Bauteil (90) aufliegt.

2. Verfahren nach Anspruch 1, **dadurch gekennzeichnet, dass** der oder die Finger (30-35) so zueinander bewegt werden, dass sie im Schritt b) aus einer Grundstellung, in der die Finger (30-35) in einer oder mehreren Gruppen nahe zueinander angeordnet sind, in eine Spannstellung verfahren werden, in der die Finger (30-35) gleichmäßiger voneinander entfernt sind.

3. Verfahren nach Anspruch 1 oder 2, **dadurch gekennzeichnet, dass** die Montageeinheit (10) mindestens vier Finger (30-35) hat, von denen zwei oder mehrere relativ zu anderen beweglich sind, und dass im Schritt b) mindestens zwei Finger (30-35) entlang eines gemeinsamen Kreises (K) oder mehrerer konzentrischer Kreise bewegt werden und im Schritt d) Finger (30-35) auf dem Kreis (K) oder den Kreisen zueinander bewegt werden.

4. Verfahren nach einem der vorhergehenden Ansprüche, **dadurch gekennzeichnet, dass** die Finger (30-35) einzeln oder gruppenweise um eine Drehachse (A), die durch den Mittelpunkt (M) des Kreises (K) oder der Kreise verläuft, relativ zueinander beweglich sind.

5. Verfahren nach Anspruch 4, **dadurch gekennzeichnet, dass** die Finger (30-35) einzeln oder gruppenweise auf Fingerträgern (40, 41, 42, 42', 42", 42‴) angeordnet sind und dass die Relativbewegung der Finger (30-35) in Schritt b) durch ein Verdrehen mindestens eines Fingerträgers (41, 42, 42', 42", 42‴) um die Drehachse (A) zu einem anderen verursacht wird.

6. Verfahren nach Anspruch 5, **dadurch gekennzeichnet, dass** die Montageeinheit (10) wenigstens zwei, vorzugsweise wenigstens drei Fingerträger (40, 41, 42, 42', 42", 42‴) aufweist, wobei zumindest ein Fingerträger (40) verdrehfest ist und der oder die weiteren Fingerträger (41, 42, 42', 42", 42‴) eine Drehbewegung um die Drehachse (A) erlauben, so dass die Finger (30-35) im Schritt b) am Umfang zumindest annähernd gleichmäßig verteilt sind, oder wobei alle Fingerträger (40, 41, 42, 42', 42", 42‴) verdrehbar sind.

7. Montageeinheit zur Durchführung des Verfahrens nach einem der vorhergehenden Ansprüche, mit wenigstens drei Fingern (30-35), von denen zumindest einer relativ zu zumindest einem anderen längs eines gemeinsamen Kreises (K) oder mehrerer konzentrischer Kreise beweglich ist, wobei die Finger (30-35) aus einer Grundstellung, in der sie umfangsmäßig ungleichmäßig auf dem Kreis (K) oder den Kreisen verteilt sind und in einen, durch einen elastischen Ring (20) umrahmten Querschnitt ragen können, in eine Spannstellung beweglich sind, in der sie gleichmäßiger auf dem Kreis (K) oder den Kreisen verteilt sind und den durch den Ring (20) umrahmten Querschnitt vergrößern, und wobei der oder die Finger (30-35) wieder zurück in die Grundstellung beweglich sind.

8. Montageeinheit nach Anspruch 7, **dadurch gekennzeichnet, dass** die Montageeinheit (10) mindestens vier Finger (30-35) hat, von denen zwei oder mehrere relativ zu anderen beweglich sind und dass mindestens zwei Finger entlang eines gemeinsamen Kreises oder mehrerer konzentrischer Kreise beweglich sind.

9. Montageeinheit nach Anspruch 7 oder 8, **dadurch gekennzeichnet, dass** die Finger (30-35) einzeln oder gruppenweise auf Fingerträgern (40, 41, 42, 42', 42", 42‴) angeordnet sind, die um eine gemeinsame Drehachse (A) relativ zueinander beweglich sind.

10. Montageeinheit nach Anspruch 9, **dadurch gekennzeichnet, dass** die Fingerträger (40, 41, 42, 42', 42", 42‴) ringförmig oder scheibenförmig sind.

11. Montageeinheit nach Anspruch 9 oder 10, **dadurch gekennzeichnet, dass** die Fingerträger (40, 41, 42, 42', 42", 42‴) in Richtung einer gemeinsamen Drehachse (A) übereinander angeordnet sind.

12. Montageeinheit nach Anspruch 11, **dadurch gekennzeichnet, dass** sich alle Finger (31-35) zu ihrem freien Ende hin von einem endseitigen Fingerträger (40) axial weg erstrecken und dass sich Finger (31-35) aller anderen Fingerträger (40, 42, 42', 42", 42‴) axial an allen Fingerträgern (42, 42', 42", 42‴) in Richtung zum endseitigen Fingerträger (40) und am endseitigen Fingerträger (40) vorbei erstrecken.

13. Montageeinheit nach einem der Ansprüche 9 bis 12, **dadurch gekennzeichnet, dass** Finger (30-35) paarweise auf einem gemeinsamen Fingerträger (40, 41, 42) sitzen und um 180° zur Drehachse (A) versetzt auf ihrem Fingerträger (40, 41, 42) angeordnet sind.

14. Montageeinheit nach einem der Ansprüche 9 bis 13, **dadurch gekennzeichnet, dass** die Fingerträger (40, 41, 42, 42', 42", 42‴) in Umfangsrichtung wirkende mechanische Endanschläge (43) haben und zumindest ein angetriebener Fingerträger (41, 42, 42', 42", 42‴) einen Mitnehmer (44) hat, wobei Mitnehmer (44) und Endanschläge (43) die relative Verdrehung der Fingerträger (40, 41, 42, 42', 42", 42‴) zueinander begrenzen, und wobei zumindest in der Spannstellung alle Fingerträger (40, 41, 42, 42', 42", 42‴) an den zugeordneten Endanschlägen (43) anliegen.

15. Montageeinheit nach Anspruch 14, **dadurch gekennzeichnet, dass** einer der Fingerträger (41) angetrieben ist und zuerst aus der Grundstellung in Richtung Spannstellung bewegt wird und auf dem Weg zwischen Grundstellung und Spannstellung über einen Mitnehmer (44), der an einen Endanschlag (43) stößt, einen anderen Fingerträger (42) mitbewegt, vorzugsweise bis der letzte bewegte Fingerträger (41) an einem Endanschlag (43) anschlägt.

16. Montageeinheit nach einem der Ansprüche 7 bis 13, **dadurch gekennzeichnet, dass** die Finger (30-35) elektrisch angetrieben sind und Sensoren die Position der Finger (30-35) in der Grundstellung und der Spannstellung definieren und/oder dass Sensoren die Position der Finger (30-35) dauerhaft erfassen und die Finger (30-35) individuell relativ zueinander beweglich sind.

17. Montageeinheit nach einem der Ansprüche 7 bis 16, **dadurch gekennzeichnet, dass** alle angetriebenen Finger (31-35) in der Grundstellung nebeneinander und in einer gemeinsamen Gruppe angeordnet sind und in der Spannstellung voneinander entfernt sind, vorzugsweise wobei die Finger der Gruppe in der Grundstellung auf einem gemeinsamen oder auf mehreren konzentrischen Kreisen liegen.

18. Montageeinheit nach einem der Ansprüche 7 bis 17, **dadurch gekennzeichnet, dass** zumindest ein Finger (30) stationär an der Montageeinheit angebracht ist und weitere Finger (31, 32) längs des Kreises (K) oder der Kreise beweglich sind.

19. Montageeinheit nach einem der Ansprüche 7 bis 18, **dadurch gekennzeichnet, dass** zumindest ein Finger (30-35) nach innen und außen beweglich ist.

20. Ringmontagevorrichtung, mit einem mehrachsigen, frei programmierbaren Arm und einer am Arm montierten Montageeinheit nach einem der Ansprüche 7 bis 19.

## Claims

1. A method of mounting at least one elastic ring (20), in particular a sealing ring, on the exterior side of a body by means of a mounting unit (10) having at least three fingers (30 to 35), at least one of which is movable relative to at least one other, **characterized by** the following method steps:
a) positioning fingers (30 to 35) and the ring (20) relative to each other such that the fingers (30 to 35) extend through a cross-section framed by the ring (20),
b) moving at least one finger (30 to 35) along a circle (K) or moving a plurality of fingers (30 to 35) along a circle (K) or a plurality of concentric circles such that the elastic ring (20) is stretched and the cross-section thereof is increased,
c) moving the ring (20) and the component (90) relative to each other so that the component (90) projects into the cross-section and the ring (20) extends around the component,
d) moving at least one finger (30 to 35) on the circle (K) or a plurality of fingers (30 to 35) on the common circle or concentric circles relative to each other so that the cross-section of the ring (20) is reduced and the ring (20) contacts the component (90) in sections between adjacent fingers (30 to 35), and
e) moving the fingers (30 to 35) out of the cross-section, the ring (20) sliding off the fingers (30 to 35) and resting completely on the component (90).

2. The method according to claim 1, **characterized in that** the finger(s) (30 to 35) are moved relative to each other so as to be moved in step b) from a basic position, in which the fingers (30 to 35) are arranged close to each other in one or more groups, to a clamping position, in which the fingers (30 to 35) are more evenly spaced apart.

3. The method according to claim 1 or 2, **characterized in that** the mounting unit (10) has at least four fingers (30 to 35), two or more of which are movable relative to others, and **in that** in step b) at least two fingers (30 to 35) are moved along a common circle (K) or a plurality of concentric circles, and in step d) fingers (30 to 35) on the circle (K) or circles are moved towards each other.

4. The method according to any of the preceding claims, **characterized in that** the fingers (30 to 35) are movable relative to each other individually or in groups about an axis of rotation (A) passing through the center (M) of the circle (K) or circles.

5. The method according to claim 4, **characterized in that** the fingers (30 to 35) are arranged individually or in groups on finger carriers (40, 41, 42, 42', 42", 42‴) and **in that** the relative movement of the fingers (30 to 35) in step b) is caused by a rotation of at least one finger carrier (41, 42, 42', 42", 42‴) to another about the axis of rotation (A).

6. The method according to claim 5, **characterized in that** the mounting unit (10) comprises at least two, preferably at least three finger carriers (40, 41, 42, 42', 42", 42‴), wherein at least one finger carrier (40) is fixed against rotation and the further finger carrier(s) (41, 42, 42', 42", 42‴) permit(s) a rotational movement about the axis of rotation (A), so that the fingers (30 to 35) in step b) are at least approximately evenly distributed at the circumference, or wherein all the finger carriers (40, 41, 42, 42', 42", 42‴) are rotatable.

7. A mounting unit for executing the method according to any of the preceding claims, comprising at least three fingers (30 to 35), at least one of which is movable relative to at least one other along a common circle (K) or a plurality of concentric circles, wherein the fingers (30 to 35) are movable from a basic position, in which they are circumferentially unevenly distributed on the circle (K) or the circles and can project into a cross-section framed by an elastic ring (20), to a clamping position, in which they are more evenly distributed on the circle (K) or circles and increase the cross-section framed by the ring (20), and wherein the finger(s) (30 to 35) are movable back to the basic position.

8. The mounting unit according to claim 7, **characterized in that** the mounting unit (10) has at least four fingers (30 to 35), two or more of which are movable relative to others, and **in that** at least two fingers are movable along a common circle or a plurality of concentric circles.

9. The mounting unit according to claim 7 or 8, **characterized in that** the fingers (30 to 35) are arranged individually or in groups on finger carriers (40, 41, 42, 42', 42", 42‴) which are movable relative to each other about a common axis of rotation (A).

10. The mounting unit according to claim 9, **characterized in that** the finger carriers (40, 41, 42, 42', 42", 42‴) are ring-shaped or disc-shaped.

11. The mounting unit according to claim 9 or 10, **characterized in that** the finger carriers (40, 41, 42, 42', 42", 42‴) are arranged one above the other in the direction of a common axis of rotation (A).

12. The mounting unit according to claim 11, **characterized in that** all fingers (31 to 35) extend axially away from an end-side finger carrier (40) towards their free end and **in that** fingers (31 to 35) of all other finger carriers (40, 42, 42', 42", 42‴) extend axially past all finger carriers (42, 42', 42", 42‴) in the direction of the end-side finger carrier (40) and past the end-side finger carrier (40).

13. The mounting unit according to any of claims 9 to 12, **characterized in that** fingers (30 to 35) are seated in pairs on a common finger carrier (40, 41, 42) and are arranged on their finger carrier (40, 41, 42) offset by 180° with respect to the axis of rotation (A).

14. The mounting unit according to any of claims 9 to 13, **characterized in that** the finger carriers (40, 41, 42, 42', 42", 42‴) have mechanical end stops (43) acting in the circumferential direction, and at least one driven finger carrier (41, 42, 42', 42", 42‴) has a driver (44), wherein the driver (44) and the end stops (43) limit the relative rotation of the finger carriers (40, 41, 42, 42', 42", 42‴) with respect to each other, and wherein at least in the clamping position all finger carriers (40, 41, 42, 42', 42", 42‴) rest against the associated end stops (43).

15. The mounting unit according to claim 14, **characterized in that** one of the finger carriers (41) is driven and is first moved from the basic position in the direction of the clamping position and, on the path between the basic position and the clamping position, also moves another finger carrier (42) via a driver (44) which abuts against an end stop (43), preferably until the last moving finger carrier (41) abuts against an end stop (43).

16. The mounting unit according to any of claims 7 to 13, **characterized in that** the fingers (30 to 35) are electrically driven and sensors define the positions of the fingers (30 to 35) in the basic position and the clamping position, and/or **in that** sensors permanently detect the positions of the fingers (30 to 35) and the fingers (30 to 35) are individually movable relative to each other.

17. The mounting unit according to any of claims 7 to 16, **characterized in that** all driven fingers (31 to 35) are arranged next to each other and in a common group in the basic position and are spaced apart from each other in the clamping position, preferably wherein the fingers of the group lie on a common or on several concentric circles in the basic position.

18. The mounting unit according to any of claims 7 to 17, **characterized in that** at least one finger (30) is attached to the mounting unit in a stationary manner and further fingers (31, 32) are movable along the circle (K) or circles.

19. The mounting unit according to any of claims 7 to 18, **characterized in that** at least one finger (30 to 35) is movable inwards and outwards.

20. A ring mounting device, comprising a multi-axis freely programmable arm and a mounting unit according to any of claims 7 to 19 which is mounted to the arm.

## Revendications

1. Procédé de montage d'au moins une bague élastique (20), en particulier d'une bague d'étanchéité, sur la face extérieure d'un corps au moyen d'une unité de montage (10) présentant au moins trois doigts (30-35), dont au moins un est mobile par rapport à au moins un autre, **caractérisé par** les étapes de procédé suivantes :
a) le positionnement des doigts (30-35) et de la bague (20) les uns par rapport à l'autre de telle sorte que les doigts (30-35) s'étendent à travers une section transversale encadrée par la bague (20),
b) le déplacement d'au moins un doigt (30-35) le long d'un cercle (K) ou le déplacement de plusieurs doigts (30-35) le long d'un cercle (K) ou de plusieurs cercles concentriques de manière à étirer la bague élastique (20) et à augmenter sa section transversale,
c) le déplacement relatif de la bague (20) et du composant (90) de sorte que le composant (90) fait saillie dans la section transversale et que la bague (20) s'étend autour du composant,
d) le déplacement d'au moins un doigt (30-35) sur le cercle (K) ou de plusieurs doigts (30-35) sur le cercle commun ou les cercles concentriques les uns par rapport aux autres, de sorte que la section transversale de la bague (20) diminue et que la bague (20) entre en contact avec le composant (90) par tronçons entre des doigts adjacents (30-35), et
e) le déplacement des doigts (30-35) hors de la section transversale, la bague (20) glissant des doigts (30-35) et reposant entièrement sur le composant (90).

2. Procédé selon la revendication 1, **caractérisé en ce que** le ou les doigts (30-35) sont déplacés les uns par rapport aux autres de manière à les faire passer, à l'étape b), d'une position initiale dans laquelle les doigts (30-35) sont agencés proches les uns des autres en un ou plusieurs groupes, dans une position de serrage dans laquelle les doigts (30-35) sont plus uniformément espacés les uns des autres.

3. Procédé selon la revendication 1 ou 2, **caractérisé en ce que** l'unité de montage (10) comporte au moins quatre doigts (30-35), dont deux ou plus sont mobiles par rapport aux autres, et **en ce que**, à l'étape b), au moins deux doigts (30-35) sont déplacés le long d'un cercle commun (K) ou de plusieurs cercles concentriques et, à l'étape d), des doigts (30-35) sont déplacés les uns par rapport aux autres sur le cercle (K) ou les cercles.

4. Procédé selon l'une des revendications précédentes, **caractérisé en ce que** les doigts (30-35) sont mobiles les uns par rapport aux autres, individuellement ou par groupes, autour d'un axe de rotation (A) passant par le centre (M) du cercle (K) ou des cercles.

5. Procédé selon la revendication 4, **caractérisé en ce que** les doigts (30-35) sont agencés individuellement ou par groupes sur des supports de doigts (40, 41, 42, 42', 42", 42‴) et **en ce que** le mouvement relatif des doigts (30-35) à l'étape b) est provoqué par une rotation d'au moins un support de doigts (41, 42, 42', 42", 42‴) par rapport à un autre autour de l'axe de rotation (A).

6. Procédé selon la revendication 5, **caractérisé en ce que** l'unité de montage (10) comporte au moins deux, de préférence au moins trois supports de doigts (40, 41, 42, 42', 42", 42‴), au moins un support de doigts (40) étant fixe en rotation et le ou les autres supports de doigts (41, 42, 42', 42", 42‴) permettant un mouvement de rotation autour de l'axe de rotation (A), de sorte que les doigts (30-35) sont répartis de manière approximativement uniforme sur la périphérie à l'étape b), ou tous les supports de doigts (40, 41, 42, 42', 42", 42‴) étant aptes à être tournés.

7. Unité de montage pour la mise en oeuvre du procédé selon l'une des revendications précédentes, comprenant au moins trois doigts (30-35), dont au moins un est mobile par rapport à au moins un autre le long d'un cercle commun (K) ou de plusieurs cercles concentriques, les doigts (30-35) étant aptes à être déplacés d'une position initiale, dans laquelle ils sont circonférentiellement répartis de manière non uniforme sur le cercle (K) ou les cercles et sont aptes à faire saillie dans une section transversale encadrée par la bague élastique, dans une position de serrage dans laquelle ils sont répartis plus uniformément sur le cercle (K) ou les cercles et augmentent la section transversale encadrée par la bague (20), et le ou les doigts (30-35) étant aptes à être ramenés dans la position initiale.

8. Unité de montage selon la revendication 7, **caractérisée en ce que** l'unité de montage (10) comporte au moins quatre doigts (30-35), dont deux ou plus sont mobiles par rapport à d'autres, et **en ce qu'**au moins deux doigts sont mobiles le long d'un cercle commun ou de plusieurs cercles concentriques.

9. Unité de montage selon la revendication 7 ou 8, **caractérisée en ce que** les doigts (30-35) sont agencés individuellement ou par groupes sur des supports de doigts (40, 41, 42, 42', 42", 42‴) qui sont mobiles les uns par rapport aux autres autour d'un axe de rotation commun (A).

10. Unité de montage selon la revendication 9, **caractérisée en ce que** les supports de doigts (40, 41, 42, 42', 42", 42‴) sont en forme d'anneau ou de disque.

11. Unité de montage selon la revendication 9 ou 10, **caractérisée en ce que** les supports de doigts (40, 41, 42, 42', 42", 42‴) sont agencés les uns au-dessus des autres dans la direction d'un axe de rotation commun (A).

12. Unité de montage selon la revendication 11, **caractérisée en ce que** tous les doigts (31-35) s'étendent axialement vers leur extrémité libre en éloignement d'un support de doigts (40) côté extrémité, et **en ce que** les doigts (31-35) de tous les autres supports de doigts (40, 42, 42', 42", 42‴) s'étendent axialement sur tous les supports de doigts (42, 42', 42", 42‴) en direction du support de doigts (40) côté extrémité et au-delà du support de doigts (40) côté extrémité.

13. Unité de montage selon l'une des revendications 9 à 12, **caractérisée en ce que** les doigts (30-35) sont placés par paires sur un support de doigts commun (40, 41, 42) et sont agencés de manière décalée de 180° par rapport à l'axe de rotation (A) sur leur support de doigts (40, 41, 42).

14. Unité de montage selon l'une des revendications 9 à 13, **caractérisée en ce que** les supports de doigts (40, 41, 42, 42', 42", 42‴) présentent des butées mécaniques de fin de course (43) agissant dans la direction circonférentielle et au moins un support de doigts (41, 42, 42', 42", 42"') entraîné présente un entraîneur (44), l'entraîneur (44) et les butées de fin de course (43) limitant la rotation relative des supports de doigts (40, 41, 42, 42', 42", 42‴) les uns par rapport aux autres, et tous les supports de doigts (40, 41, 42, 42', 42", 42‴) s'appuyant sur les butées de fin de course (43) associées au moins dans la position de serrage.

15. Unité de montage selon la revendication 14, **caractérisée en ce que** l'un des supports de doigts (41) est entraîné et est d'abord déplacé de la position initiale vers la position de serrage et, sur le trajet entre la position initiale et la position de serrage, entraîne un autre support de doigts (42) par l'intermédiaire d'un entraîneur (44) qui vient en butée contre une butée de fin de course (43), de préférence jusqu'à ce que le dernier support de doigts (41) déplacé vient en butée contre une butée de fin de course (43).

16. Unité de montage selon l'une des revendications 7 à 13, **caractérisée en ce que** les doigts (30-35) sont entraînés électriquement et que des capteurs définissent la position des doigts (30-35) dans la position initiale et dans la position de serrage et/ou **en ce que** des capteurs détectent en permanence la position des doigts (30-35) et les doigts (30-35) sont mobiles individuellement les uns par rapport aux autres.

17. Unité de montage selon l'une des revendications 7 à 16, **caractérisée en ce que** tous les doigts entraînés (31-35) sont agencés côte à côte et en un groupe commun dans la position initiale et sont éloignés les uns des autres dans la position de serrage, les doigts du groupe étant agencés sur un cercle commun ou sur plusieurs cercles concentriques dans la position initiale.

18. Unité de montage selon l'une des revendications 7 à 17, **caractérisée en ce qu'**au moins un doigt (30) est monté fixe sur l'unité de montage et **en ce que** d'autres doigts (31, 32) sont mobiles le long du cercle (K) ou des cercles.

19. Unité de montage selon l'une des revendications 7 à 18, **caractérisée en ce qu'**au moins un doigt (30-35) est mobile vers l'intérieur et vers l'extérieur.

20. Dispositif de montage de bague, comprenant un bras multiaxial librement programmable et une unité de montage selon l'une des revendications 7 à 19 montée sur le bras.
